# EUROPEAN PATENT APPLICATION

(11) **EP 4 129 639 A1**
(43) Date of publication of application: **08.02.2023**
(21) Application number: 21774322.8
(22) Date of filing: 24.03.2021
(51) Int. Cl.: B31B 70/00, B31B 70/10, B31B 70/20, B31B 70/64, B31B 160/20

(54) **METHOD FOR MANUFACTURING RECTANGULAR-BOTTOMED PACKAGING BAG, DEVICE FOR MANUFACTURING RECTANGULAR-BOTTOMED PACKAGING BAG, METHOD FOR MANUFACTURING PACKAGING BODY, AND DEVICE FOR MANUFACTURING PACKAGING BODY**

(30) Priority: 26.03.2020 JP 2020056464
(71) Applicant: Hosokawa Yoko Co., Ltd., Tokyo 102-0084 (JP)
(72) Inventor: UMENAKA Kazuhiro, Tokyo 102-0084 (JP); KUGE Raizo, Tokyo 102-0084 (JP); OGURA Shoji, Nagoya-shi, Aichi 462-0063 (JP)
(74) Representative: Wallinger, Michael
(86) International application number: PCT/JP2021/012373
(87) International publication number: WO 2021/193759

(57) **Abstract**

A method for manufacturing a rectangular-bottomed packaging bag includes an unfolding step of unfolding a flat bag by separating a pair of opening/closing plates (13) inserted into the flat bag from each other in a thickness direction of the flat bag, and a gusset forming step, after the unfolding step, of forming a side gusset and a bottom gusset by thrusting folding plates (11 and 12) between the pair of opening/closing plates (13) from the outside of the bag toward the inside of the bag.

## Description

### TECHNICAL FIELD

The present invention relates to a method for manufacturing a rectangular-bottomed packaging bag, a device for manufacturing a rectangular-bottomed packaging bag, a method for manufacturing a packaging body, and a device for manufacturing a packaging body.

Priority is claimed on Japanese Patent Application No. 2020-056464, filed March 26, 2020, the content of which is incorporated herein by reference.

### BACKGROUND ART

In the related art, a rectangular-bottomed-type packaging bag (hereinafter referred to as "a rectangular-bottomed packaging bag") including gussets on three sides, that is, a bottom gusset and two side gussets, is known. Since rectangular-bottomed packaging bags have excellent properties, such as storing properties, self-standing properties, and quality of appearance, for example, they are widely utilized for packing medical supplies and food.

Regarding methods for manufacturing such rectangular-bottomed packaging bags, various aspects are disclosed.

For example, Patent Literature 1 discloses a method for manufacturing a rectangular-bottomed packaging bag from a flat bag including a bottom gusset. The flat bag is formed from a film of which inner and outer surfaces have heat sealing properties such that four portions of the film, that is, both end edges of a bag front surface portion, both end edges of a bag rear surface portion, and both end edges of the bottom gusset, are integrated by a heat sealer. According to the technology described in Patent Literature 1, the bottom gusset and side gussets can be formed by individually thrusting folding plates facing the centers on both side surfaces of the formed flat bag and a folding plate facing the center on a lower surface of the formed flat bag from the outside of the bag toward the inside of the bag after predetermined ranges in the bag front surface portion and the bag rear surface portion of the formed flat bag are suctioned and separated from each other.

### [Related Art Documents]

### [Patent Documents]

[Patent Document 1] Japanese Unexamined Patent Application, First Publication No. 2002-332049

### SUMMARY OF INVENTION

### Problem to be solved by the Invention

However, in the technology described in Patent Literature 1, a specific holding form of how to hold the bag when a bag front surface portion and a bag rear surface portion are brought into close contact with each other while folding plates are thrust into the bag is unclear. For this reason, it is unclear whether or not an objective rectangular-bottomed packaging bag can be manufactured. In addition, in a step of forming a flat bag, when a circumferential edge portion of a bottom gusset is sealed by the general bag making machine described in Patent Literature 1 using a film of which inner and outer surfaces have heat sealing properties, four portions of the film, that is, both end edges of the bag front surface portion, both end edges of the bag rear surface portion, and both end edges of the bottom gusset, are integrated so that the bottom gusset cannot open. For this reason, there is a probability that productivity may deteriorate.

In addition, a manufactured rectangular-bottomed packaging bag may be filled with a content so that it may be shipped as a packaging body filled with a content. In such a case, it is desired to improve productivity in a series of work steps from manufacturing of a rectangular-bottomed packaging bag to filling the bag with a content.

Hence, in the present invention, a method for holding a flat bag including a bottom gusset when manufacturing a rectangular-bottomed packaging bag including gussets on three sides from the flat bag is made clear. Also, the present invention provides a method for manufacturing a rectangular-bottomed packaging bag in which productivity thereof is improved, a device for manufacturing a rectangular-bottomed packaging bag, a method for manufacturing a packaging body, and a device for manufacturing a packaging body.

### Means for Solving the Problem

According to a first aspect of the present invention, a method for manufacturing a rectangular-bottomed packaging bag is provided, in which a rectangular-bottomed packaging bag including gussets on three sides is manufactured from a flat bag. The method for manufacturing a rectangular-bottomed packaging bag includes an unfolding step of unfolding the flat bag from the inside of the bag such that an opening cross section of the flat bag has a rectangular shape, and a gusset forming step, after the unfolding step, of forming a side gusset and forming a bottom gusset while the formed side gusset is held.

According to a second aspect of the present invention, in the method for manufacturing a rectangular-bottomed packaging bag, the unfolding step includes a plate inserting step of inserting a pair of opening/closing plates into the flat bag, and a plate separating step of separating the pair of opening/closing plates inserted into the flat bag from each other in a thickness direction of the flat bag. In the gusset forming step, the side gusset and the bottom gusset are formed by thrusting a folding plate between the pair of opening/closing plates from the outside of the bag toward the inside of the bag.

According to a third aspect of the present invention, the method for manufacturing a rectangular-bottomed packaging bag includes a pillar-joining-portion forming step of forming pillar joining portions extending along four corners of the opening cross section by joining a circumferential edge portion of the side gusset after the gusset forming step.

According to a fourth aspect of the present invention, the method for manufacturing a rectangular-bottomed packaging bag includes a flat bag manufacturing step of manufacturing the flat bag before the unfolding step. In the flat bag manufacturing step, a side joining portion formed in a side portion of the flat bag, a bottom joining portion formed in a bottom portion of the flat bag, and an inclined joining portion formed in a corner portion where the side joining portion and the bottom joining portion intersect each other and connecting the side joining portion and the bottom joining portion to each other are formed.

According to a fifth aspect of the present invention, in the method for manufacturing a rectangular-bottomed packaging bag, the unfolding step is consecutively performed after the flat bag manufacturing step.

According to a sixth aspect of the present invention, a device for manufacturing a rectangular-bottomed packaging bag is provided, in which the rectangular-bottomed packaging bag is manufactured by the method for manufacturing a rectangular-bottomed packaging bag described above. The device for manufacturing a rectangular-bottomed packaging bag includes a pair of opening/closing plates for opening and closing so as to open the flat bag from the inside of the bag such that a cross section of the flat bag has a rectangular shape, a side portion folding plate which enters a space between the pair of opening/closing plates and forms the side gusset, and a bottom portion folding plate which enters a space between the pair of opening/closing plates and forms the bottom gusset.

According to a seventh aspect of the present invention, a method for manufacturing a packaging body is provided including a filling step of consecutively manufacturing a packaging body after a step of performing the method for manufacturing a rectangular-bottomed packaging bag described above by filling the manufactured rectangular-bottomed packaging bag with a content.

According to an eighth aspect of the present invention, a device for manufacturing a packaging body is provided, in which the packaging body is manufactured by the method for manufacturing a packaging body described above. The device for manufacturing a packaging body includes a filling device which fills the rectangular-bottomed packaging bag with the content.

### Effect of the Invention

According to the present invention, it is possible to provide a method for manufacturing a rectangular-bottomed packaging bag, a device for manufacturing a rectangular-bottomed packaging bag, a method for manufacturing a packaging body, and a device for manufacturing a packaging body, in which a method for holding a flat bag including a bottom gusset when a rectangular-bottomed packaging bag including gussets on three sides is manufactured from the flat bag is made clear and productivity is improved.

### BRIEF DESCRIPTION OF THE DRAWINGS

Fig. 1 is a perspective view of a packaging body according to the present embodiment.
Fig. 2 is a front view of a flat bag according to the present embodiment.
Fig. 3 is a perspective view of an appearance of a rectangular-bottomed packaging bag according to the present embodiment.
Fig. 4 is a bottom view of the rectangular-bottomed packaging bag according to the present embodiment.
Fig. 5 is a partial perspective view illustrating the inside of the rectangular-bottomed packaging bag according to the present embodiment.
Fig. 6 is an explanatory view illustrating a plate inserting step according to the present embodiment.
Fig. 7 is an explanatory view illustrating a plate separating step according to the present embodiment.
Fig. 8 is an explanatory view illustrating a folding started state in a gusset forming step according to the present embodiment.
Fig. 9 is an explanatory view illustrating a folding ended state in the gusset forming step according to the present embodiment.
Fig. 10 is a plan view of a device for manufacturing a packaging body according to the present embodiment.
Fig. 11 is a view of an appearance of a flat bag manufacturing device according to the present embodiment.
Fig. 12 is a cross-sectional view along line XII-XII in Fig. 10.
Fig. 13 is a plan view of a folding device according to the present embodiment.
Fig. 14 is a perspective view illustrating an operation of the folding device according to the present embodiment.
Fig. 15 is a cross-sectional view along line XV-XV in Fig. 10.
Fig. 16 is a perspective view of an appearance of the rectangular-bottomed packaging bag according to a first modified example.
Fig. 17 is a perspective view of an appearance of the rectangular-bottomed packaging bag according to a second modified example.
Fig. 18 is a plan view of the folding device according to a third modified example.

### EMBODIMENTS FOR CARRYING OUT THE INVENTION

Embodiments of the present invention are described based on the drawings. In the following description, the same reference signs are applied to constituents having the same or similar functions. Further, duplicate description of the constituents may be omitted.

### (Method for manufacturing packaging body)

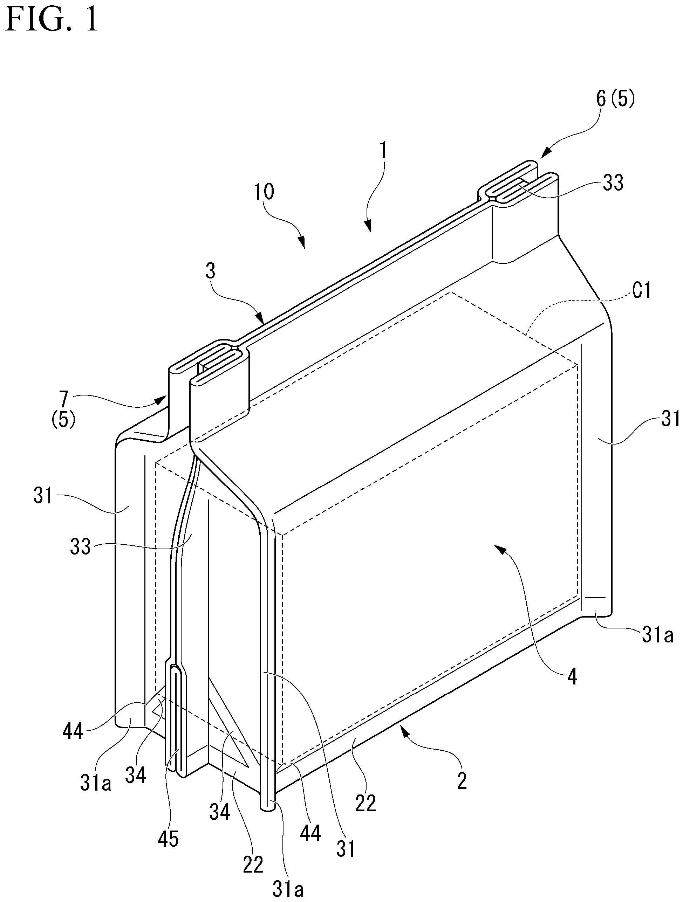

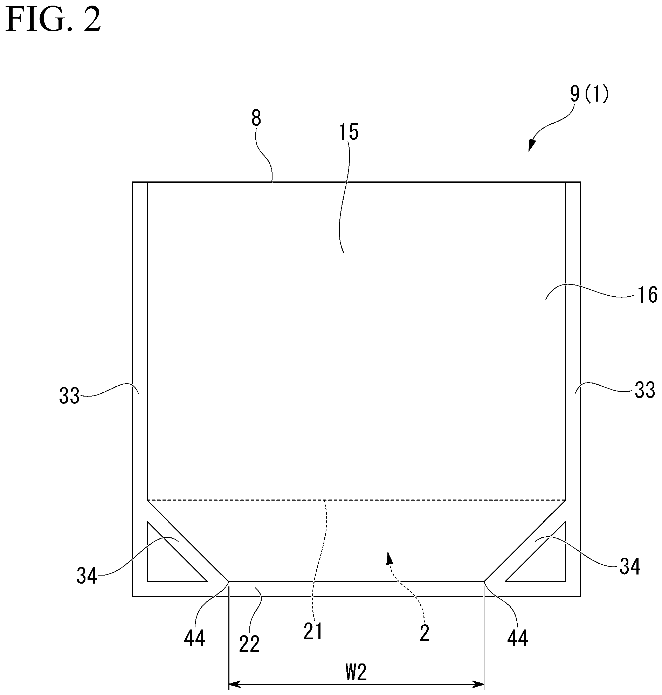

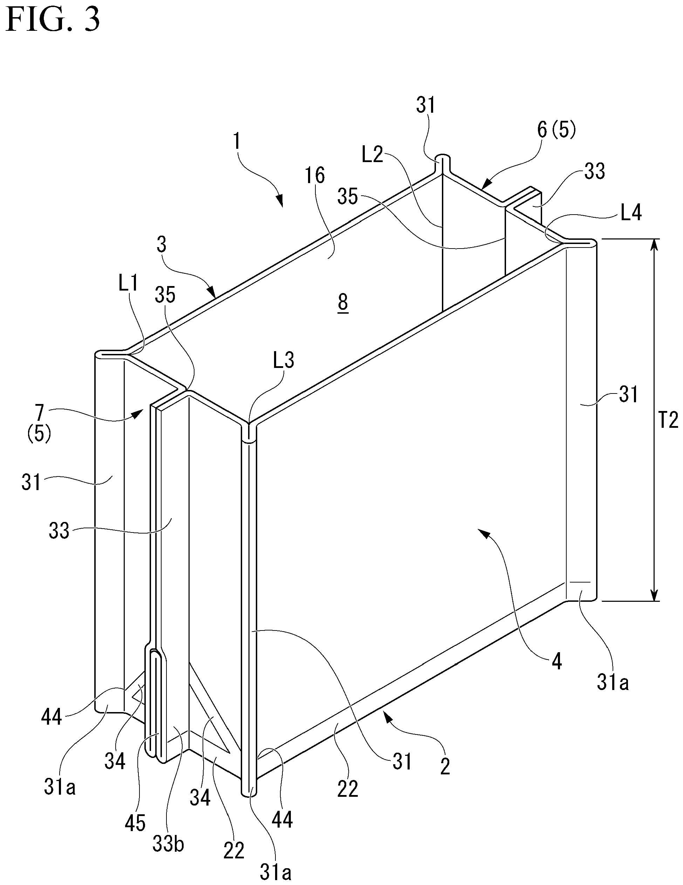

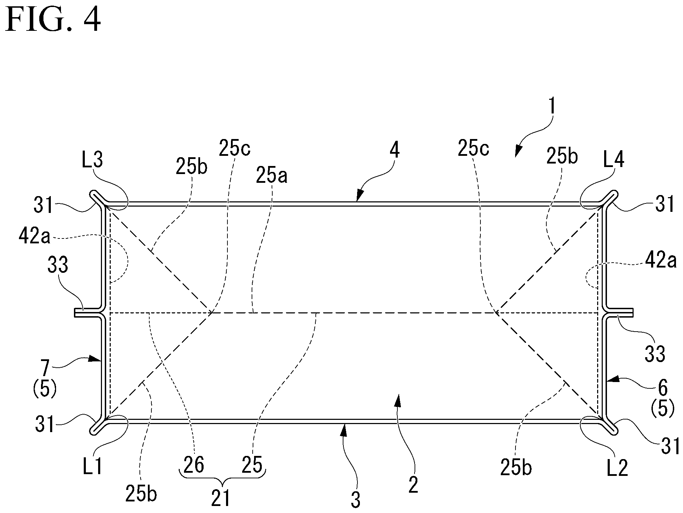

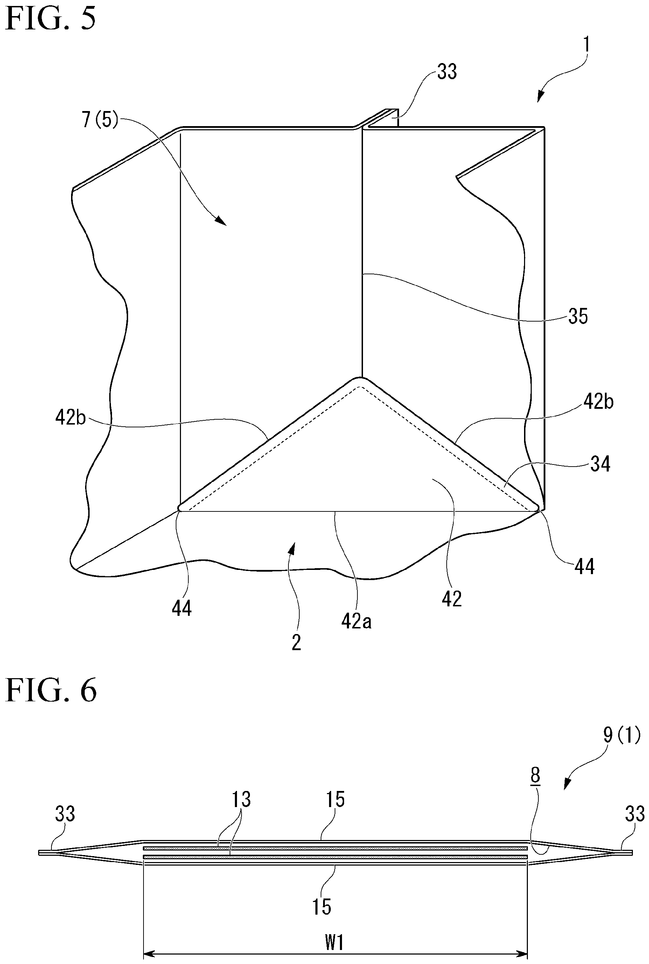

Fig. 1 is a perspective view of a packaging body 10 according to the present embodiment. Fig. 2 is a front view of a flat bag 9 according to the present embodiment. Fig. 3 is a perspective view of an appearance of a rectangular-bottomed packaging bag 1 according to the present embodiment. Fig. 4 is a bottom view of the rectangular-bottomed packaging bag 1 according to the present embodiment. Fig. 5 is a partial perspective view illustrating the inside of the rectangular-bottomed packaging bag 1 according to the present embodiment.

A method for manufacturing a packaging body according to the present invention, in which the packaging body 10 illustrated in Fig. 1 is manufactured, is a method for manufacturing the packaging body 10 corresponding to a rectangular-bottomed packaging body in a state of being filled with a content C1 by forming the rectangular-bottomed packaging bag 1 from the flat bag 9 (refer to Fig. 2) and filling the inside of the rectangular-bottomed packaging bag 1 with the content C1. The method for manufacturing a packaging body includes a step of performing a method for manufacturing a rectangular-bottomed packaging bag according to the present invention and a filling step.

### (Method for manufacturing rectangular-bottomed packaging bag)

The method for manufacturing a rectangular-bottomed packaging bag, in which the rectangular-bottomed packaging bag 1 illustrated in Fig. 3 is manufactured, constitutes a step of performing the method for manufacturing the rectangular-bottomed packaging bag 1 before being filled with the content C1 in the method for manufacturing a packaging body. The method for manufacturing a rectangular-bottomed packaging bag is a manufacturing method in which the flat bag 9 including one bottom gusset 21 (refer to Fig. 2) is bent in a particular form and then the rectangular-bottomed packaging bag 1 including gussets on three sides, that is, one bottom gusset 21 (refer to Fig. 4) having a length different from that of the bottom gusset 21 (refer to Fig. 2) of the flat bag 9 and two side gussets 35, is formed.

More specifically, the method for manufacturing a rectangular-bottomed packaging bag according to the present invention includes a case of manufacturing the rectangular-bottomed packaging bag 1 from the flat bag 9 manufactured in advance, and a case of manufacturing the rectangular-bottomed packaging bag 1 continuously or non-continuously after a flat bag manufacturing step of manufacturing the flat bag 9.

Hereinafter, an example of the flat bag manufacturing step of manufacturing the flat bag 9 is described.

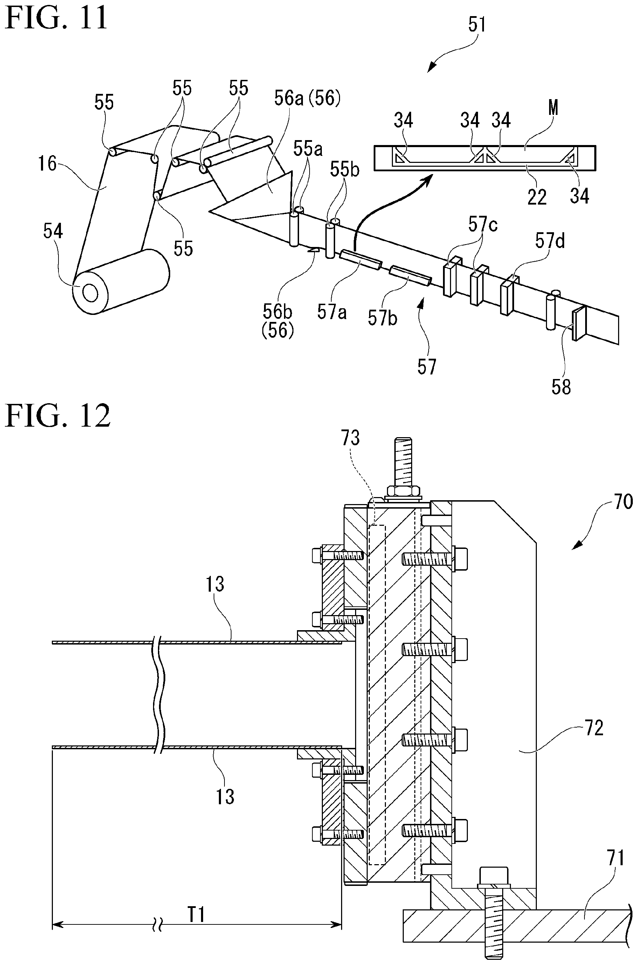

As illustrated in Fig. 11, in the flat bag manufacturing step, a belt-like film 16 fed from a raw material roll is bent a plurality of times, and the flat bag 9 from which the rectangular-bottomed packaging bag 1 is formed is manufactured. The film 16 is a laminate film in which a bi-axially oriented film or a uniaxially oriented film formed of a material such as polyethylene terephthalate, polypropylene, polyamide and/or the like, and a sealant film or a resin layer made of a polyethylene-based resin such as a low-density polyethylene or a linear low-density polyethylene or a polypropylene-based resin formed by an extrusion laminate are laminated together. In order to exhibit a gas barrier function of blocking oxygen and vapor, a deposited film in which a metal such as an aluminum or the like, or a metal oxide such as an aluminum oxide, a silicon oxide or the like is deposited may be laminated on the film 16.

In the flat bag manufacturing step, first, the bottom gusset 21 is formed by folding a single film 16 such that a cross section thereof viewed in a direction orthogonal to a longitudinal direction thereof has a W-shape. The bottom gusset 21 is formed between a pair of flat portions 15 which are formed by folding the film 16. The bottom gusset 21 is folded in half protruding to the inside of the bag.

Next, side joining portions 33 are formed by joining both end edges of the pair of flat portions 15 to each other.

Next, bottom joining portions 22 are formed by joining the pair of flat portions 15 and circumferential edge portions of the bottom gusset 21 to each other. Both end portions of the bottom joining portions 22 are connected to the side joining portions 33. The bottom joining portions 22 are provided in a boundary portion between one of the pair of flat portions 15 and the bottom gusset 21, and a boundary portion between the other of the pair of flat portions 15 and the bottom gusset 21.

Next, in corner portions where the side joining portions 33 and the bottom joining portions 22 intersect each other, inclined joining portions 34 are formed that obliquely connect the side joining portions 33 and the bottom joining portions 22 to each other. That is, in corner portions of the flat bag 9 including portions where the side joining portions 33 and the bottom joining portions 22 are connected to each other, the inclined joining portions 34 connecting the side joining portions 33 and the bottom joining portions 22 to each other are provided, and the inclined joining portions 34 are inclined to approach the bottom joining portions 22 from the side joining portions 33 as the distances from the side joining portions 33 increase. Inclination angles of the inclined joining portions 34 with respect to the side joining portions 33 and the bottom joining portions 22 are approximately 45 degrees. End portions of the inclined joining portions 34 on the side joining portions 33 side are provided at positions equivalent to that of a folding line of the bottom gusset 21 in a height direction of the flat bag 9 (a longitudinal direction of the side joining portions 33).

The order of forming the side joining portions 33, the bottom joining portions 22, and the inclined joining portions 34 is not limited to that described above, and some of joining portions of these joining portions may be formed at the same time.

Here, in the flat bag manufacturing step, the side joining portions 33, the bottom joining portions 22, and the inclined joining portions 34 described above are formed by heating the heat fusion layers thereof, the heat fusion layer being provided on a surface on one side of the film 16. The heat fusion layer is formed on a surface of the film 16 on the inner side of the bag. Sealant film constituting the heat fusion layer is formed of an unstretched film, a resin, or the like that is a polypropylene-based one or a polyethylene-based one such as a low-density polyethylene, a linear low-density polyethylene or the like. In the flat bag manufacturing step, the heat fusion layers are fused to each other by applying heat and pressure at positions corresponding to each of the joining portions 22, 33, and 34. Accordingly, the bottom joining portions 22, the side joining portions 33, and the inclined joining portions 34 are formed.

Moreover, in lower end portions 33b of the side joining portions 33 positioned on the bottom gusset 21 side, the outer surfaces of the film 16 are joined to each other so that one surface and the other surface (surfaces facing each other) of the bottom gusset 21 folded in half are joined to each other. In portions where the outer surfaces of portions of the film 16 are joined to each other in this manner, the outer surfaces of the film 16 are subjected to a heat seal coating. For example, the heat seal coating may be formed in a printing step of the film 16. In addition, a hot-melt adhesive may be used. By means of these, the outer surfaces of the film 16 on which the heat fusion layers are not provided can be joined to each other. The outer surfaces of the film 16 may not be joined to each other depending on usage of the rectangular-bottomed packaging bag 1. However, in regard to enhancing the self-standing properties of the rectangular-bottomed packaging bag 1, it is preferable that the outer surfaces of the film 16 be joined to each other.

In this manner, in the flat bag manufacturing step, after the single film 16 is folded, the flat bag 9 having an opening 8 on one side and having one bottom gusset 21 in an end portion on a side opposite to the opening 8 is formed by joining predetermined portions.

In a rectangular-bottomed packaging bag manufacturing step in which the method for manufacturing a rectangular-bottomed packaging bag according to the present invention is performed, the rectangular-bottomed packaging bag 1 illustrated in Figs. 3 to 5 is manufactured from the flat bag 9.

Here, first, a constitution of the rectangular-bottomed packaging bag 1 is described. The rectangular-bottomed packaging bag 1 includes a rectangular (quadrangular) bottom 2, a front 3, a rear 4, and a pair of sides 5. In the following description related to the rectangular-bottomed packaging bag 1, a direction in which the front 3 and the rear 4 face each other may be referred to as a front-rear direction. In addition, a direction in which the pair of sides 5 face each other may be referred to as a left-right direction. In addition, a direction orthogonal to both the front-rear direction and the left-right direction may be referred to as an upright direction or a height direction. In addition, in the upright direction, a side where the bottom 2 is positioned may be referred to as a lower side, and a side opposite thereto may be referred to as an upper side.

The front 3 and the rear 4 rise upward from two long sides of the bottom 2 and are disposed such that they face each other with the bottom 2 sandwiched therebetween. The front 3 and the rear 4 are formed to have a rectangular shape. The pair of sides 5 rise upward from two short sides of the bottom 2 and connect the front 3 and the rear 4 to each other. One of the pair of sides 5 is a right side 6. The other of the pair of sides 5 is a left side 7. The opening 8 that acts as a passage between the inside and outside of the rectangular-bottomed packaging bag 1 is provided at end portions (upper end portions) of the front 3, the rear 4, and the pair of sides 5 on a side opposite to the bottom 2. A first boundary line L1 extending in the height direction of the rectangular-bottomed packaging bag 1 is provided between the front 3 and the left side 7. In other words, the front 3 and the left side 7 are continuously formed via the first boundary line L1. Similarly, the front 3 and the right side 6 are continuously formed via a second boundary line L2 extending in the height direction. The rear 4 and the left side 7 are continuously formed via a third boundary line L3 extending in the height direction. The rear 4 and the right side 6 are continuously formed via a fourth boundary line L4 extending in the height direction.

As illustrated in Fig. 4, the bottom 2 of the rectangular-bottomed packaging bag 1 includes the bottom gusset 21. In the rectangular-bottomed packaging bag 1, the bottom gusset 21 includes a valley-folded portion 25 which is bent such that it protrudes toward the inside of the bag, and mountain-folded portions 26 which are bent such that they project toward the outside of the bag. The valley-folded portion 25 is provided in an intermediate portion between the front 3 and the rear 4. The valley-folded portion 25 is formed to have a straight portion 25a which is parallel to the front 3 and the rear 4 and terminates on an inward side of the circumferential edge portion of the bottom 2, and V-shaped portions 25b which extend from both end portions 25c of the straight portion 25a toward corresponding (adjacent) corner portions of the bottom 2. The mountain-folded portions 26 extend from both the end portions 25c of the straight portion 25a in the valley-folded portion 25 toward the short sides of the bottom 2 in a direction for the most part perpendicular to the short sides of the bottom 2. When the bottom gusset 21 is bent such that it protrudes toward the inside of the bag along the valley-folded portion 25 and the mountain-folded portions 26, the bottom 2 is folded in half so that the front 3 and the rear 4 are close to each other.

As illustrated in Figs. 3 and 4, the bottom joining portions 22 are formed at the circumferential edge of the bottom 2. The bottom joining portions 22 extend from lower end portions of the front 3, the rear 4, the left side 7, and the right side 6 with a uniform width on the same plane as each of these surfaces and are provided in the whole circumference of the rectangular-bottomed packaging bag 1. The bottom joining portions 22 protrude downward from the bottom 2. Accordingly, the rectangular-bottomed packaging bag 1 stands on its own with the bottom joining portions 22 acting as footing thereof.

As illustrated in Fig. 3, the inclined joining portions 34 are formed on the sides 5. The inclined joining portions 34 are formed on the front 3 side and the rear 4 side with respect to the side joining portions 33 on the side 5. The inclined joining portions 34 are inclined to gradually approach the bottom 2 side from the side joining portions 33 as the inclined joining portions 34 approach the front 3 or the rear 4. Bottom side end portions 44 positioned on the bottom 2 side of the inclined joining portions 34 are connected to the bottom joining portions 22. The side joining portion 33, the bottom joining portion 22, and the inclined joining portion 34 form an isosceles right triangle shape having the inclined joining portion 34 as hypotenuse. That is, the inclined joining portion 34 are formed to constitute an isosceles right triangle shape having the inclined joining portion 34 as hypotenuse together with a portion of the side joining portion 33 and a portion of the bottom joining portion 22. The bottom side end portions 44 in which sides of the inclined joining portions 34 on an outward side (upper side) formed with a uniform width and the bottom joining portions 22 intersect each other become base points of four sides in the rectangular-bottomed packaging bag 1.

As illustrated in Fig. 5, a folding portion 42 having an isosceles triangle shape is formed inside the bag on the side 5 of the rectangular-bottomed packaging bag 1 (only the left side 7 side is illustrated in Fig. 5). The folding portion 42 is connected to the bottom 2 via the bottom joining portions 22. The folding portion 42 has an isosceles right triangle shape in which a side overlapping the short side of the bottom 2 when viewed from the inside of the rectangular-bottomed packaging bag 1 is a hypotenuse 42a. Two equal sides 42b of the folding portion 42 are provided on the side 5. The two equal sides 42b of the folding portion 42 are inclined to the bottom 2 side as they approach the front 3 or the rear 4 from the side joining portion 33 with one arbitrary point on the side joining portion 33 (one arbitrary point in the side joining portion 33 connected to the side 5) as an apex. The two equal sides 42b of the folding portion 42 coincide with the outer sides of the inclined joining portions 34. Namely, the inclined joining portions 34 perform positioning of the folding portion 42.

On the rear side of the folding portion 42 (outer side of the bag), a sandwiched portion 45 (refer to Fig. 3) connected to the folding portion 42 is provided along a perpendicular line drawn from the apex having a corner of approximately 90 degrees in a triangular shape to an opposite side that is a hypotenuse overlapping the short side of the bottom 2. The sandwiched portion 45 is sandwiched by the side joining portion 33. Since the sandwiched portion 45 is sandwiched by the side joining portion 33, an apex portion of the folding portion 42 is connected to the side 5.

The sandwiched portion 45 is provided on a lower side of the side joining portion 33. The sandwiched portion 45 is provided at a position corresponding to a position between a portion on a lowest end portion 33b of the side joining portion 33 and a position corresponding to the apex portion of the inclined joining portion 34 (a position at the same height as the apex portion of the inclined joining portion 34).

When viewed from the inside of the bag, the two equal sides 42b of the folding portion 42 and the side 5 are joined to each other by the inclined joining portions 34. Accordingly, since a gap between the equal sides 42b of the folding portion 42 and the side 5 is closed, when the rectangular-bottomed packaging bag 1 is filled with the content C1, the content C1 is prevented from entering the gap between the folding portion 42 and the side 5.

As illustrated in Fig. 3, the side gussets 35 are provided on the left side 7 and the right side 6 and have joining portions derived from the side joining portions 33 of the flat bag 9.

The side gussets 35 are bent on the right side 6 and the left side 7, such that they protrude toward the inside of the bag when the rectangular-bottomed packaging bag 1 is closed, in central portions between the front 3 and the rear 4 and in a width dimension of the rectangular-bottomed packaging bag 1 in the front-rear direction (thickness direction of the front 3 and the rear 4).

Next, the method for manufacturing a rectangular-bottomed packaging bag, in which the rectangular-bottomed packaging bag 1 according to the present invention is manufactured, is described.

In the present embodiment, the rectangular-bottomed packaging bag 1 described above is manufactured from a flat bag. Specifically, the method for manufacturing a rectangular-bottomed packaging bag includes an unfolding step and a gusset forming step and preferably includes a pressing step and a pillar-joining-portion forming step.

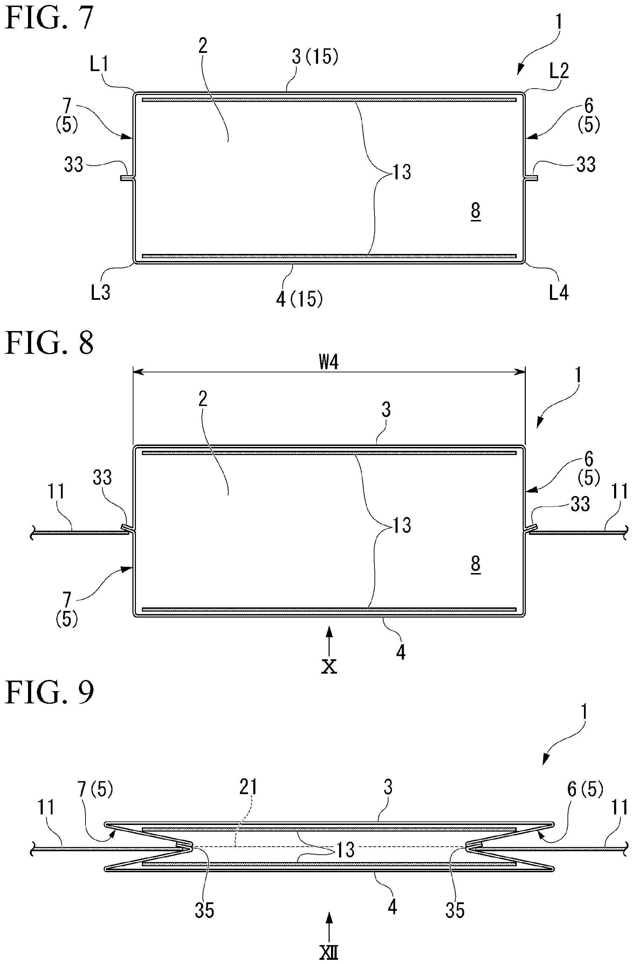

In the unfolding step, the flat bag 9 is unfolded from the inside of the bag such that an opening cross section of the flat bag 9 (a cross-sectional shape of the opening of the flat bag 9 when viewed in a direction orthogonal to an unfolding direction) has a rectangular shape. The unfolding step includes a plate inserting step and a plate separating step. Fig. 6 is an explanatory view illustrating the plate inserting step according to the present embodiment. Fig. 7 is an explanatory view illustrating the plate separating step according to the present embodiment.

As illustrated in Fig. 6, in the plate inserting step, a pair of opening/closing plates 13 for opening and closing are inserted into the flat bag 9 through the opening 8 of the flat bag 9 in a state of being at positions close to each other. Alternatively, the pair of opening/closing plates 13 are inserted into the flat bag 9 through the opening 8 by moving the flat bag 9 such that the pair of opening/closing plates 13 are covered by the flat bag 9. The pair of opening/closing plates 13 are disposed such that they face each other in the thickness direction of the flat bag 9 (a direction in which the pair of flat portions 15 face each other). The pair of opening/closing plates 13 are formed to have rectangular shapes equivalent to each other. Width lengths W1 of the opening/closing plates 13 in the left-right direction are equivalent to a length W2 between the bottom side end portions 44 of the pair of inclined joining portions 34 (refer to Fig. 2) formed in both the end portions of the bottom joining portion 22.

As illustrated in Fig. 7, in the plate separating step, the pair of opening/closing plates 13 inserted into the flat bag 9 are separated from each other in the thickness direction of the flat bag 9. Accordingly, the front 3, the rear 4, and the pair of sides 5 are formed, and the bottom 2 is formed by unfolding the bottom gusset 21 folded in half. Specifically, in the plate separating step, the first boundary line L1 is formed by bending the film 16 at a position of the flat portion 15 in the flat bag 9 corresponding to (abutting) a left end portion of one of the opening/closing plates 13. The second boundary line L2 is formed by bending the film 16 at a position of the flat portion 15 corresponding to (abutting) a right end portion of the one of the opening/closing plates 13. The third boundary line L3 is formed by bending the film 16 at a position of the flat portion 15 corresponding to (abutting) a left end portion of the other of the opening/closing plates 13. The fourth boundary line L4 is formed by bending the film 16 at a position of the flat portion 15 corresponding to (abutting) a right end portion of the other of the opening/closing plates 13. A plane between the first boundary line L1 and the second boundary line L2 becomes the front 3. A plane between the third boundary line L3 and the fourth boundary line L4 becomes the rear 4. A plane between the first boundary line L1 and the third boundary line L3 becomes the left side 7. A plane between the second boundary line L2 and the fourth boundary line L4 becomes the right side 6. The first boundary line L1, the second boundary line L2, the third boundary line L3, and the fourth boundary line L4 become four corners, and a portion provided on a side opposite to the opening 8 becomes the bottom 2.

Fig. 8 is an explanatory view illustrating a folding started state in the gusset forming step according to the present embodiment. Fig. 9 is an explanatory view illustrating a folding ended state in the gusset forming step according to the present embodiment.

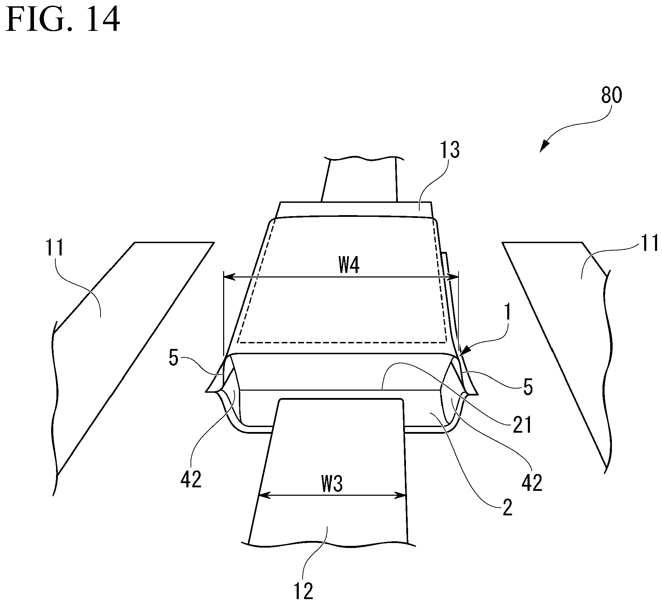

As illustrated in Figs. 8 and 9, in the gusset forming step, after the unfolding step, a pair of side gussets 35 are formed, and the bottom gusset 21 is formed while the formed side gussets 35 are held. In the gusset forming step, the pair of flat portions 15 (the front 3 and the rear 4) are brought into contact with each other while a pair of side portion folding plates 11 facing the left side 7 and the right side 6 and a bottom portion folding plate 12 facing the bottom 2 (refer to Fig. 14) are thrust from the outside of the bag toward the inside of the bag. Accordingly, the side gussets 35 and the bottom gusset 21 are respectively formed.

Specifically, as illustrated in Fig. 8, in the gusset forming step, first, the side portion folding plates 11 parallel to the opening/closing plates 13 are inserted (thrust) toward the inside of the bag along the central portions of the left side 7 and the right side 6 in a width direction. Moreover, the bottom portion folding plate 12 parallel to the opening/closing plates 13 (refer to Fig. 14) is inserted (thrust) toward the inside of the bag along the central portion of the bottom 2 in the width direction (the short side direction, the front-rear direction). At this time, a width length W3 of the bottom portion folding plate 12 in the left-right direction (refer to Fig. 14) is smaller than a width length W4 of the bottom 2 in the left-right direction. The side portion folding plates 11 and the bottom portion folding plate 12 are inserted between the pair of opening/closing plates 13.

As illustrated in Fig. 9, when insertion of the side portion folding plates 11 and the bottom portion folding plate 12 is started, the pair of opening/closing plates 13 are caused to become closer to each other again in accordance with insertion depths of the side portion folding plates 11 and the bottom portion folding plate 12. After the side portion folding plates 11 and the bottom portion folding plate 12 are inserted to a predetermined depth, the side portion folding plates 11 and the bottom portion folding plate 12 are pulled out toward the outside of the bag in a state in which the opening/closing plates 13 are closed. Accordingly, a bag including gussets on three sides (the rectangular-bottomed packaging bag 1 in a closed state), in which the bottom gusset 21 and the side gussets 35 protruding toward the inside of the bag are formed, is formed.

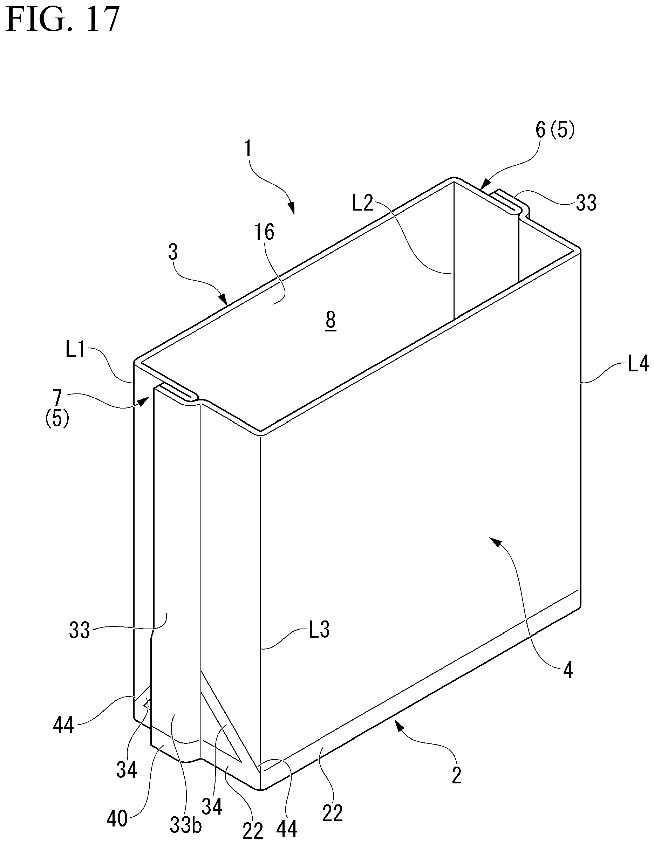

In the pressing step, a folded property is applied such that a folded line is maintained by pressing a folded line portion of the film 16 formed in the gusset forming step. Specifically, in the pressing step, both side end portions of the rectangular-bottomed packaging bag 1 having the four boundary lines L1, L2, L3, and L4 formed therein are heated and pressurized. Accordingly, since the four boundary lines L1, L2, L3, and L4 remain even in a state in which the rectangular-bottomed packaging bag 1 is open (refer to Figs. 3 and 17), the opening cross-sectional shape is likely to maintain a rectangular shape. Thus, when the rectangular-bottomed packaging bag 1 is filled with the content C1, the quality of appearance of the rectangular-bottomed packaging bag 1 can be improved and the self-standing properties of the rectangular-bottomed packaging bag 1 can be improved without exhibiting a rounded silhouette of the rectangular-bottomed packaging bag 1.

In the pillar-joining-portion forming step, four pillar joining portions 31 extending along four corners of the opening cross section are formed by joining the circumferential edge portions of the side gussets 35. In the pillar-joining-portion forming step, the pillar joining portions 31 are formed along the first boundary line L1, the second boundary line L2, the third boundary line L3, and the fourth boundary line L4. Specifically, in the pillar-joining-portion forming step, in the rectangular-bottomed packaging bag 1 in a state in which the front 3 and the rear 4 are brought into contact with each other (a closed state, refer to Fig. 9), an edge portion where inner surfaces of the front 3 and the left side 7 face each other are heated and pressurized. The pillar joining portion 31 along the first boundary line L1 is formed by joining the edge portion of the front 3 and the left side 7 to each other in this manner. Regarding the second boundary line L2, the third boundary line L3, and the fourth boundary line L4, the pillar joining portion 31 are also formed at corresponding positions by a similar procedure.

The formed pillar joining portions 31 protrude such that parts of the film 16 protrude toward the outside of the bag along the respective boundary lines L1, L2, L3, and L4. Lower end portions 31a positioned on the bottom 2 side of the pillar joining portions 31 are connected to the bottom joining portions 22. However, bag inner surface sides of portions of the lower end portions 31a of the pillar joining portions 31 overlapping the bottom joining portions 22 are not joined in the film in which the heat fusion layer is formed on only one surface of the film 16. Inner edges of the pillar joining portions 31 nearly become the corner portions of the rectangular-bottomed packaging bag 1.

In the filling step, consecutively after the step of performing the method for manufacturing a rectangular-bottomed packaging bag, the packaging body 10 is manufactured by filling the manufactured rectangular-bottomed packaging bag 1 with the content C1.

In the filling step, first, the manufactured rectangular-bottomed packaging bag 1 is unfolded again. Next, the inside of the rectangular-bottomed packaging bag 1 is filled with the content C1 through the opening 8. Last, the opening 8 is closed by sealing the film 16 in the vicinity of the opening 8. Accordingly, the packaging body 10 in a state in which the rectangular-bottomed packaging bag 1 is filled with the content C1 is manufactured.

In the filling step, before filling with the content C1, for example, a zipper or the like for freely opening and closing the opening 8 of the rectangular-bottomed packaging bag 1 may be formed in the opening 8. In this case, after filling with the content C1, the opening 8 can be closed by closing the zipper when the film 16 are sealed. In addition, the zipper or the like may be provided in a step prior to the filling step, for example, in a stage of the step of manufacturing the flat bag 9.

### (Device for manufacturing packaging body)

Next, a device 50 for manufacturing a packaging body, in which the packaging body 10 described above is manufactured, is described.

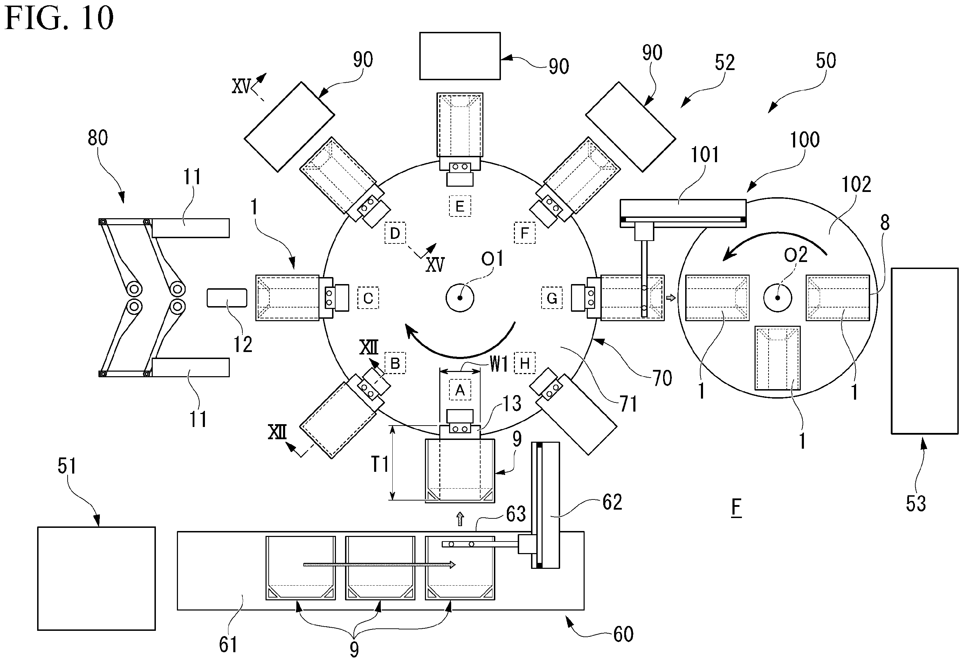

Fig. 10 is a plan view of the device 50 for manufacturing a packaging body according to the present embodiment.

The device 50 for manufacturing a packaging body is a device for manufacturing the packaging body 10 by the method for manufacturing a packaging body described above. The device 50 for manufacturing a packaging body includes a flat bag manufacturing device 51, a rectangular-bottomed packaging bag manufacturing device 52 (device for manufacturing a rectangular-bottomed packaging bag described in the claims), and a filling device 53. The rectangular-bottomed packaging bag manufacturing device 52 is provided on a downstream side of the flat bag manufacturing device 51 in the manufacturing step. The filling device 53 is provided on a downstream side of the rectangular-bottomed packaging bag manufacturing device 52 in the manufacturing step.

Fig. 11 is a view of an appearance of the flat bag manufacturing device 51 according to the present embodiment.

The flat bag manufacturing device 51 is a device for manufacturing the flat bag 9 from a single film 16 through the flat bag manufacturing step described above.

The flat bag manufacturing device 51 includes a raw material roll 54 around which the film 16 (a material of the rectangular-bottomed packaging bag 1) is wound, a plurality of rollers 55, two abutting plates 56, a fusing part 57, and a cutting portion 58.

The belt-like film 16 is wound around the raw material roll 54.

The plurality of rollers 55 support the film 16 fed from the raw material roll 54 and send the film 16. A pair of first sandwiching rollers 55a and a pair of second sandwiching rollers 55b are disposed on a downstream side of the plurality of rollers 55. The sandwiching rollers 55a and 55b sandwich the belt-like film 16 in a state in which the pair of flat portions 15 (refer to Fig. 2) are formed by being folded in half along the longitudinal direction.

The two abutting plates 56 have a function of folding the belt-like film 16.

An abutting plate 56a of the two abutting plates 56 on an upstream side is on an upstream side of the first sandwiching rollers 55a, and fold the film 16 in half to include two portions in the width direction thereof to obtain the film 16 having a V-shaped cross section.

An abutting plate 56b of the two abutting plates 56 on a downstream side is provided between the first sandwiching rollers 55a and the second sandwiching rollers 55b. The abutting plate 56b abuts a mountain-folded portion (a portion including a mountain folding line) of the film 16 which is sent by the first sandwiching rollers 55a and folded in half. The abutting plate 56b folds the film 16 such that the mountain-folded portion of the film 16 protruding toward one side is valley folded to protrude toward the other side. Accordingly, the abutting plate 56b forms a film 16 having a W-shaped cross section with the bottom gusset 21 from the film 16 having a V-shaped cross section. Namely, the second sandwiching rollers 55b provided on a downstream side of the abutting plates 56 sandwich the film 16 having a W-shaped cross section therebetween.

The fusing part 57 is provided on a downstream side of the second sandwiching rollers 55b. The fusing part 57 includes a bottom portion fusing part 57a and a side portion fusing part 57c.

The bottom portion fusing part 57a is provided along a lower side of the film 16 having a W-shaped cross section. The bottom portion fusing part 57a causes the inner surfaces of the film 16 to be fused to each other by performing heating and pressurizing while sandwiching the lower end portion of the film 16 from both sides between a pair of sealing molds M having protruding parts with shapes corresponding to the bottom joining portions 22 and the inclined joining portions 34. The bottom portion fusing part 57a forms the bottom joining portions 22 and the inclined joining portions 34 in the flat bag 9 described above at the same time. A bottom portion cooling part 57b is disposed on a downstream side of the bottom portion fusing part 57a. The bottom portion cooling part 57b cools the film 16 heated by the bottom portion fusing part 57a.

The side portion fusing part 57c is provided along the height direction of the film 16 having a W-shaped cross section (a direction perpendicular to the bottom portion fusing part 57a). The side portion fusing part 57c causes the film 16 to be fused by performing heating and pressurizing while sandwiching portions which become side portions of the flat bag 9 from both sides (both sides in the thickness direction). The side portion fusing part 57c forms the side joining portions 33 in the flat bag 9 described above (refer to Fig. 2). A side portion cooling part 57d is disposed on a downstream side of the side portion fusing part 57c. The side portion cooling part 57d cools the film 16 heated by the side portion fusing part 57c.

The cutting portion 58 is provided on a downstream side of the fusing part 57. The cutting portion 58 cuts the film 16 at regular intervals. In a state before being cut by the cutting portion 58, the film 16 is in a state in which the flat bags 9 described above are continuous in the width direction, that is, a state in which the side joining portions 33 of the flat bags 9 are connected to each other. The cutting portion 58 cuts a portion between the connected side joining portions 33 of the flat bags 9 along a short direction of the film 16 by each width of the flat bags 9. Accordingly, the flat bag 9 is formed. The flat bag 9 manufactured by the flat bag manufacturing device 51 is supplied to a bag feeding device 60 of the rectangular-bottomed packaging bag manufacturing device 52 (refer to Fig. 10).

As illustrated in Fig. 10, the rectangular-bottomed packaging bag manufacturing device 52 is a device for manufacturing the rectangular-bottomed packaging bag 1 in a state before being filled with the content C1 from the flat bag 9 manufactured by the flat bag manufacturing device 51 by the method for manufacturing a rectangular-bottomed packaging bag described above. The rectangular-bottomed packaging bag manufacturing device 52 includes the bag feeding device 60, an opening/closing device 70, a folding device 80, a pressing device 90, and a collecting device 100. The bag feeding device 60 is a device for supplying the flat bag 9 manufactured by the flat bag manufacturing device 51 to the opening/closing device 70. The bag feeding device 60 includes a conveying portion 61 such as a belt conveyor, and a bag feeding arm 62. The conveying portion 61 conveys the flat bags 9 one by one toward the opening/closing device 70 in an intermittent sending manner. The bag feeding arm 62 is provided at a position corresponding to (a position close to) a bag receiving portion 63 where the bag feeding arm 62 receives the bag in the bag feeding device 60. For example, the bag feeding arm 62 opens the flat bag 9 by suctioning the flat bag 9 from both sides using vacuum suction pads and feeds the bag to the opening/closing device 70 by moving the bag from the bag receiving portion 63 in a state in which the opening 8 is open.

For example, the bag feeding device 60 may include a bag magazine (not illustrated) storing a plurality of stacked flat bags 9. In this case, the flat bag 9 may be supplied from the bag magazine to the opening/closing device 70 via the conveying portion 61.

The opening/closing device 70 is disposed at a position corresponding to (position close to) the bag receiving portion 63 of the bag feeding device 60. The opening/closing device 70 includes a rotary table 71 and a plurality of pairs of opening/closing plates 13.

The rotary table 71 is formed to have a circular shape centering on a rotation axis O1 in a vertical upright direction (which hereinafter is simply referred to as an upright direction). The rotary table 71 rotates centering on the rotation axis O1 with respect to a floor F. The rotary table 71 includes eight stations (stations A to H in order) in which any two of the eight stations are separated by a rotation angle of 45 degrees, and a station at a position corresponding to the bag receiving portion 63 of the bag feeding device 60 is the station A. The rotary table 71 rotates by 45 degrees so that the opening/closing plates 13 are intermittently sent to each of the stations in order.

The pair of opening/closing plates 13 are provided in an outer circumferential portion of the rotary table 71. The pair of opening/closing plates 13 is provided at a position corresponding to each of the stations in the rotary table 71. In other words, in the present embodiment, eight pairs of opening/closing plates 13 are provided at equal intervals in a circumferential direction of the rotary table 71. The pair of opening/closing plates 13 opens the flat bag 9 from the inside of the bag such that the opening cross section of the flat bag 9 has a rectangular shape.

Fig. 12 is a cross-sectional view along line XII-XII in Fig. 10. In Fig. 12, for explanation, illustration of the flat bag 9 (rectangular-bottomed packaging bag 1) is omitted.

The pair of opening/closing plates 13 is attached to the rotary table 71 via a base member 72 attached to the rotary table 71. Specifically, the pair of opening/closing plates 13 is attached to an actuator 73 which is provided in the base member 72 and can move in the upright direction. The pair of opening/closing plates 13 is disposed such that they face each other in the upright direction. The pair of opening/closing plates 13 protrude from the base member 72 toward an outer radial side of the rotary table 71. When the actuator 73 is driven, the pair of opening/closing plates 13 is opened and closed between a close state in which the opening/closing plates 13 are close to each other (refer to Fig. 6) and a separated state in which the opening/closing plates 13 are separated from each other (refer to Fig. 7). A separation length between the pair of opening/closing plates 13 in a separated state is equivalent to a separation length between the front 3 and the rear 4 in the rectangular-bottomed packaging bag 1. The opening/closing plates 13 are formed to have a rectangular shape in a plan view. The width lengths W1 of the opening/closing plates 13 (refer to Fig. 10) in the circumferential direction of the rotary table 71 are equivalent to the width length W4 of the rectangular-bottomed packaging bag 1 (refer to Fig. 8). Longitudinal lengths T1 of the opening/closing plates 13 in a radial direction of the rotary table 71 are larger than a height length T2 from the opening 8 of the rectangular-bottomed packaging bag 1 to a bottom portion thereof (refer to Fig. 3). The rectangular-bottomed packaging bag 1 is held by the pair of opening/closing plates 13 due to the pair of opening/closing plates 13 coming into contact therewith inside the bag.

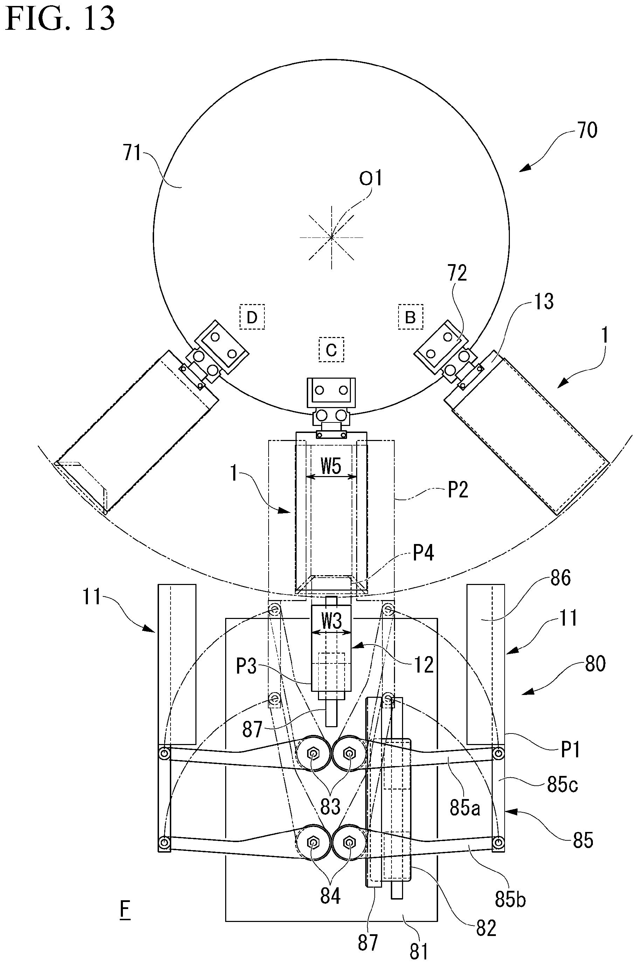

Fig. 13 is a plan view of the folding device 80 according to the present embodiment. Fig. 14 is a perspective view illustrating an operation of the folding device 80 according to the present embodiment.

As illustrated in Figs. 10 and 13, the folding device 80 is disposed on the outward side in the radial direction of the rotary table 71. In the present embodiment, the folding device 80 is provided at a position corresponding to (close to) the station C in the rotary table 71. The folding device 80 includes a support stand 81, the side portion folding plates 11, and the bottom portion folding plate 12.

The support stand 81 is installed on the floor F. As illustrated in Fig. 13, the support stand 81 includes a driving mechanism 82 including a motor (not illustrated) which serves as a drive source, a cam (not illustrated) connected to the motor, a rack 87, and the like. In the present embodiment, the driving mechanism 82 includes first output shafts 83 extending in the upright direction, and second output shafts 84 provided at positions farther from the rotary table 71 than the first output shafts 83 and are parallel to the first output shafts 83.

The pair of side portion folding plates 11 are provided on both sides of the support stand 81 in the left-right direction in the circumferential direction of the rotary table 71. Since the pair of side portion folding plates 11 includes constitutions equivalent to each other, the side portion folding plate 11 on one side is described in the following description, and description of the side portion folding plate 11 on the other side is omitted. Each of the side portion folding plates 11 includes a link mechanism 85 connected to the motor via the cam or the like, and a side portion movable plate 86 connected to the link mechanism 85.

The link mechanism 85 includes a first link arm 85a, a second link arm 85b, and a third link arm 85c. One end portion of the first link arm 85a is attached to the first output shaft 83. The first link arm 85a performs swinging rotation centering on the one end portion thereof when viewed in the upright direction. Specifically, the first link arm 85a is provided in the left-right direction of the support stand 81 and performs swinging rotation between a state in which the other end portion thereof is positioned on the outward side of the one end portion in the left-right direction (preparation state) and a state in which the other end portion is rotated by approximately 90 degrees to the rotary table 71 side from the preparation state. Accordingly, the side portion folding plates 11 move between a preparation position P1 disposed away from the rotary table 71 and a folding position P2 positioned on the rotary table 71 side with respect to the preparation position P1.

The second link arm 85b is provided at a position farther from the rotary table 71 than the first link arm 85a. One end portion of the second link arm 85b is attached to the second output shaft 84. The second output shaft 84 is coupled to the first output shaft 83 via the rack 87. The second link arm 85b performs swinging rotation centering on the one end portion thereof when viewed in the upright direction. The first link arm 85a and the second link arm 85b perform swinging rotation at the same time while maintaining a substantially parallel state.

The third link arm 85c is rotatably attached to the other end portion of the first link arm 85a and the other end portion of the second link arm 85b. The third link arm 85c moves to the rotary table 71 side while maintaining a state parallel to the front-rear direction of the support stand 81 (a direction along the radial direction of the rotary table 71) in accordance with swinging motions of the first link arm 85a and the second link arm 85b. Namely, when the side portion folding plates 11 move from the preparation position P1 to the folding position P2, the pair of left and right third link arms 85c move to the front side where the rotary table 71 is positioned and in a direction in which they become closer to each other while maintaining a state in which they are parallel to each other. For this reason, movable ranges of the side portion folding plates 11 of the folding device 80 can be made small, the side portion movable plates 86 can abut both the sides 5 of the rectangular-bottomed packaging bag 1 at the same time in a parallel manner, and therefore the side gussets 35 can be reliably formed.

Moreover, the first output shaft 83 and the second output shaft 84 connected to the side portion folding plate 11 on the other side are connected to the first output shaft 83 and the second output shaft 84 connected to the side portion folding plate 11 on one side via spur gears. Thus, all of the pair of left and right first output shafts 83 and second output shafts 84 can rotate at the same rotation speed.

The side portion movable plate 86 is fixed to the end portion on the rotary table 71 side in the third link arm 85c extending in the front-rear direction. The side portion movable plate 86 is formed to have a plate shape having the upright direction as the thickness direction thereof. The side portion movable plate 86 is formed to have a rectangular shape having the front-rear direction of the support stand 81 as the longitudinal direction thereof. The side portion movable plate 86 protrudes toward further inward side of the support stand 81 in the left-right direction than the third link arm 85c. As illustrated in Fig. 14, in a state while the side portion folding plates 11 move toward the folding position P2 from the preparation position P1, the side portion movable plates 86 are positioned on both sides of the side portions of the flat bag 9 (the sides 5 of the rectangular-bottomed packaging bag 1) in an open state held by the opening/closing plates 13.

As illustrated in Fig. 13, the bottom portion folding plate 12 is provided between the pair of side portion folding plates 11. The bottom portion folding plate 12 is provided in a front end portion of the support stand 81. The bottom portion folding plate 12 is connected to the rack 87 having a linear shape in the front-rear direction. The bottom portion folding plate 12 moves in the front-rear direction of the support stand 81. The bottom portion folding plate 12 is formed to have a plate shape having the upright direction as the thickness direction thereof. The width length W3 in the left-right direction of the bottom portion folding plate 12 is equal to or smaller than a width length W5 between the side portion movable plates 86 in the pair of side portion folding plates 11 positioned at the folding position P2. The bottom portion folding plate 12 moves from a preparation position P3 to a folding position P4 toward the opening/closing device 70 side in accordance with movement of the side portion folding plates 11 from the preparation position P1 to the folding position P2.

Referring to Fig. 10, the pressing device 90 is provided on a downstream side of the folding device 80 in the manufacturing step in a rotation direction of the rotary table 71. In the present embodiment, the pressing device 90 is provided at each of positions corresponding to (close to) the stations D, E, and F in the rotary table 71. These pressing devices 90 have constitutions equivalent to each other except for some points. For this reason, in the following description, the pressing device 90 installed in the station D is described, and different points of the pressing devices 90 installed in other stations are described.

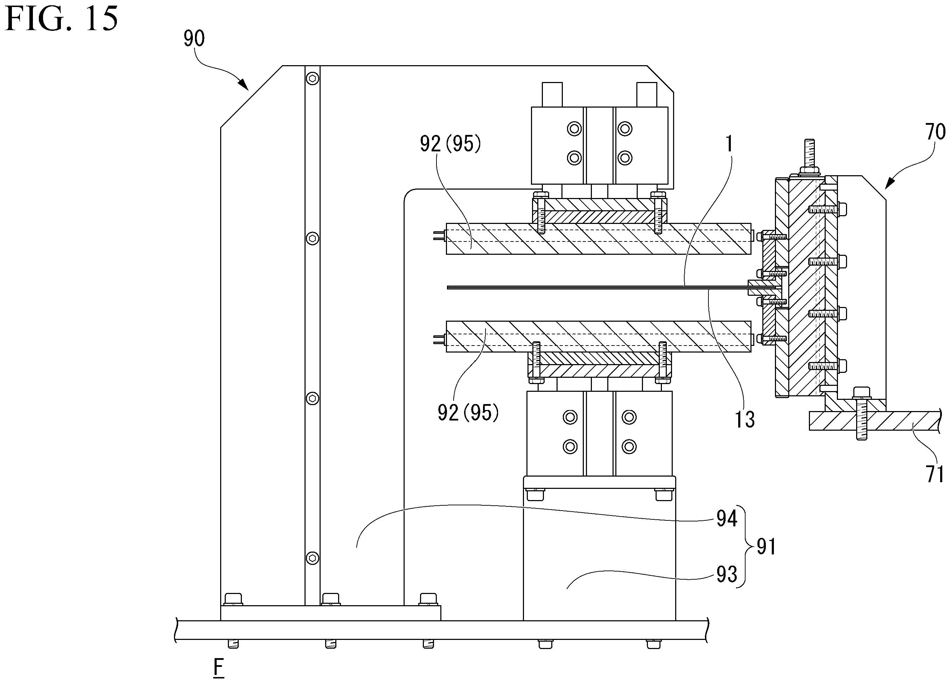

Fig. 15 is a cross-sectional view along line XV-XV in Fig. 10.

The pressing device 90 provided in the station D includes a support structure 91 and a pair of temperature plates 92. The temperature plates 92 have a function of heating.

The support structure 91 is disposed in the station D such that it faces a rotation body (rotary table 71). The support structure 91 is installed on the floor F. The support structure 91 includes a lower structure 93 positioned below the opening/closing plates 13 positioned in the station D, and an upper structure 94 extending from below to a position extending above the opening/closing plates 13.

The pair of temperature plates 92 are attached to the lower structure 93 and the upper structure 94. The temperature plates 92 are formed to have a plate shape having the upright direction as the thickness direction thereof. The opening/closing plates 13 are disposed between the pair of temperature plates 92. The temperature plates 92 can individually move in the upright direction.

The temperature plates 92 sandwich the rectangular-bottomed packaging bag 1 held by the opening/closing plates 13 and the opening/closing plates 13 from both sides thereof in the upright direction in a state of being heated to a predetermined temperature. Regarding a predetermined temperature, for example, the temperature plates 92 are set at a temperature equal to or lower than 100 degrees Celsius at which the heat fusion layer of the film 16 does not melt,. In this manner, a folded property is applied to the gussets 21 and 35, the folding portions 42, and the like of the rectangular-bottomed packaging bag 1 by heating and pressurizing the rectangular-bottomed packaging bag 1 (not illustrated in Fig. 15).

The pressing device 90 provided in the station E includes pillar joining portion forming plates 95 in place of the pair of temperature plates 92 described above. The pillar joining portion forming plates 95 are attached to the lower structure 93 and the upper structure 94. The pillar joining portion forming plates 95 sandwich the side portions of the rectangular-bottomed packaging bag 1 from both sides in the upright direction in a state of being heated to a predetermined temperature. The pillar joining portion forming plates 95 form the pillar joining portions 31 (refer to Fig. 3) in which the inner surfaces of parts of the film 16 are joined to each other by heating and pressurizing portions corresponding to the side portions of the rectangular-bottomed packaging bag 1. Temperatures of the pillar joining portion forming plates 95 are higher than temperatures of the temperature plates 92.

In the pressing device 90 provided in the station F, the temperature plates 92 described above have a function of cooling.

As illustrated in Fig. 10, the collecting device 100 is provided on a downstream side of the pressing device 90 in the rotation direction of the rotary table 71. In the present embodiment, the collecting device 100 is provided at a position corresponding to the station G of the rotary table 71.

The collecting device 100 includes a collecting arm 101 and a reception rotary table 102.

The collecting arm 101 includes a vacuum suction pad and removes the rectangular-bottomed packaging bag 1 from the opening/closing plates 13 by suctioning the rectangular-bottomed packaging bag 1 held by the opening/closing plates 13. The collecting arm 101 moves the suctioned rectangular-bottomed packaging bag 1 to the reception rotary table 102. The reception rotary table 102 rotates around a rotation axis O2, the rotation axis extending in the upright direction with respect to the floor F. The reception rotary table 102 conveys the rectangular-bottomed packaging bag 1 received from the collecting arm 101.

The filling device 53 is provided on a downstream side of the collecting device 100 in the manufacturing step. The filling device 53 fills the rectangular-bottomed packaging bag 1, which is manufactured by the rectangular-bottomed packaging bag manufacturing device 52 described above, with the content C1. Specifically, the filling device 53 opens the opening 8 of the rectangular-bottomed packaging bag 1 received from the reception rotary table 102 and fills it with the content C1. The filling device 53 includes a closing part (not illustrated) for sealing the opening 8 of the rectangular-bottomed packaging bag 1 after filling.

Accordingly, the packaging body 10 having the rectangular-bottomed packaging bag 1 filled with the content C1 is manufactured.

### (Operation of rectangular-bottomed packaging bag manufacturing device)

Next, an operation in each of the stations of the rectangular-bottomed packaging bag manufacturing device 52 described above is described.

First, an operation in the station A is described. The station A is a receiving portion in which the opening/closing device 70 receives the flat bag 9 from the bag feeding device 60. In the station A, first, the bag feeding arm 62 suctions a portion in the vicinity of the opening of the flat bag 9 and opens the flat bag 9 in the upright direction. That is, the bag feeding arm 62 make the flat bag 9 open in a direction orthogonal to the upright direction by suctioning a portion in the vicinity of the opening of the flat bag 9 and moving it in the upright direction. Next, the bag feeding arm 62 moves the flat bag 9 in an open state to the pair of opening/closing plates 13 side. At this time, the pair of opening/closing plates 13 are in a close state in which they are closest to each other. The bag feeding arm 62 moves the flat bag 9 such that the pair of opening/closing plates 13 in the close state are covered in the upright direction. Next, a vacuum suction pad of the bag feeding arm 62 is detached from the flat bag 9 and causes the flat bag 9 to be supported by the opening/closing plates 13. When the flat bag 9 is supported by the opening/closing plates 13, the rotary table 71 is rotated by approximately 45 degrees, and the opening/closing plates 13 supporting the flat bag 9 moves to the station B.

In the station B, first, the pair of opening/closing plates 13 are in a separated state in which they are separated from each other so that the flat bag 9 is unfolded from the inside of the bag. In other words, in the station B, the unfolding step is performed. The shape of the bottom 2 of the unfolded flat bag 9 and a cross-sectional shape viewed from the opening 8 side are a rectangular shape. In addition, at this time, portions which become the sides 5 of the rectangular-bottomed packaging bag 1 are bent along the perpendicular lines, and the folding portions 42 are formed, the perpendicular lines extending from portions in the vicinity of the bottom side end portions 44 of the inclined joining portions 34 toward the opening 8 side with respect to the bottom (refer to Fig. 2). When the unfolding step is completed, the rotary table 71 rotates by approximately 45 degrees, and the opening/closing plates 13 supporting the opened flat bag 9 move to the station C.

In the station C, the gusset forming step of forming the side gussets 35 and the bottom gusset 21 is performed. In the station C, first, the motor connected to the link mechanism 85 is driven, and the pair of side portion folding plates 11 move from the preparation position P1 toward the folding position P2 at the same time. The pair of side portion folding plates 11 move at the same time so that the side portion folding plates 11 are inserted (thrust) between the pair of opening/closing plates 13 while maintaining a state parallel to the opening/closing plates 13. Moreover, as the insertion depth of the side portion folding plates 11 becomes deeper, the pair of opening/closing plates 13 shift from a separated state to a close state. Accordingly, the V-shaped side gussets 35 protruding toward the inside of the bag are formed on both the sides 5 of the flat bag 9.

More specifically, after insertion of the side portion folding plates 11 starts and immediately before the opening/closing plates 13 reach a close state completely, the side portion folding plates 11 most deeply enter the inside of the bag (most deeply thrust into the bag). When the opening/closing plates 13 reach a close state, the side portion folding plates 11 start an operation of separation from the side gussets 35. Thereafter, when the side portion folding plates 11 are separated from positions between the pair of opening/closing plates 13, the side gussets 35 are reliably formed by sandwiching parts of the film 16 corresponding to the sides 5 (parts of the film 16 forming the sides 5) using the opening/closing plates 13 in a close state.

When being moved to the station C after the unfolding step illustrated in Fig. 14, the shape of the bottom 2 of the unfolded flat bag 9 and a cross-sectional shape viewed from the opening 8 side are a rectangular shape. However, in the vicinity of the bottom 2, both the sides 5 of the unfolded flat bag 9 have a shape slightly expanding as they approach the bottom 2 from the opening 8 (a shape slightly protruding toward the outward side in the left-right direction). The slightly expanding folding portions 42 are present in portions on the bottom 2 side of both the sides 5. The shapes of these portions are formed due to a repulsive force of the bottom gusset 21 of the unfolded flat bag 9 when unfolded which tends to return to the original state. Even if such expanding folding portions 42 are present, since they are forcibly folded from both the sides 5 of the unfolded flat bag 9 due to an operation of the opening/closing plates 13 and the side portion folding plates 11 described above, the side gussets 35 are reliably formed.

In addition, in the station C, the rack 87 for the bottom portion folding plate 12 is driven slightly after start of an operation of the side portion folding plates 11, so that the bottom portion folding plate 12 starts an insertion operation (thrusting operation toward the inside of the bag). Specifically, when the side portion folding plates 11 start insertion (thrusting) and the opening/closing plates 13 start shifting to a close state, the bottom gusset 21 is naturally folded toward the inside of the bag along the present valley folding portion 25. During this folding process, the bottom portion folding plate 12 moves from the preparation position P3 to the folding position P4 toward the central portion of the bottom gusset 21. Namely, the bottom portion folding plate 12 starts an insertion operation toward the inside of the bag during a period of time from when the side portion folding plates 11 abut the side portions of the flat bag 9 until the insertion operation of the side portion folding plates 11 ends to switch to a separation operation. The bottom portion folding plate 12 are separated from a position between the pair of opening/closing plates 13 before the opening/closing plates 13 reach a completely close state. Accordingly, the bottom gusset 21 is formed.

At this time, four folded lines (the V-shaped portions 25b of the valley-folded portion 25, refer to Fig. 4) which are not present in the flat bag 9 before becoming the rectangular-bottomed packaging bag 1 are newly formed on the bottom 2. Moreover, the perpendicular lines extending from both the end portions 25c in the straight portion 25a of the valley-folded portion 25, with which the bottom portion folding plate 12 comes into contact, toward the hypotenuses 42a of the folding portions 42 change to a mountain-folded state from a valley-folded state. That is, the perpendicular lines are folded toward a side opposite to a side toward which the perpendicular lines folded in the flat bag 9.

A new folded line along this perpendicular line is provided to be a predetermined shape formed by the opening/closing plates 13, the side portion folding plates 11, and the bottom portion folding plate 12. That is, a new folded line along the perpendicular line is maintained by an operation of the opening/closing plates 13, the side portion folding plates 11, and the bottom portion folding plate 12.

In a state in which the pair of opening/closing plates 13 reach a close state, the side portion folding plates 11 and the bottom portion folding plate 12 are separated from the rectangular-bottomed packaging bag 1. Thus, in a state in which the gusset forming step in the station C is completed, the side gussets 35 and the bottom gusset 21 are sandwiched between the pair of opening/closing plates 13. When the gusset forming step is completed, the rotary table 71 rotates by approximately 45 degrees, and the opening/closing plates 13 supporting the rectangular-bottomed packaging bag 1 move to the station D.

In the station D, the opening/closing plates 13 in a close state are sandwiched between the temperature plates 92 in the upright direction. At this time, a folded property is applied to each of the gussets 21 and 35, the folding portions 42 and the like by heating and pressurizing the rectangular-bottomed packaging bag 1 using the temperature plates 92. That is, in the station D, the pressing step is performed. When heating and pressurizing in the station D are completed, the rotary table 71 rotates by approximately 45 degrees, and the opening/closing plates 13 supporting the rectangular-bottomed packaging bag 1 move to the station E.

In the station E, the opening/closing plates 13 in a close state are sandwiched between the temperature plates 92 in the upright direction, and the pillar joining portions 31 are formed by joining portions corresponding to the circumferential edge portions on the sides 5 of the rectangular-bottomed packaging bag 1. In other words, in the station E, the pillar-joining-portion forming step is performed. When formation of the pillar joining portions 31 is completed, the rotary table 71 rotates by approximately 45 degrees, and the opening/closing plates 13 supporting the rectangular-bottomed packaging bag 1 move to the station F.

In the station F, similarly in the station D, the opening/closing plates 13 in a close state are cooled while being sandwiched between the temperature plates 92 in the upright direction so that a strong folded property is applied thereto. That is, in the station F, the pressing step is performed again. When cooling and pressurizing in the station F are completed, the rotary table 71 rotates by approximately 45 degrees, and the opening/closing plates 13 supporting the rectangular-bottomed packaging bag 1 move to the station G.

In the station G, the formed rectangular-bottomed packaging bag 1 is collected. In the station G, first, a portion in the vicinity of the bottom portion of the rectangular-bottomed packaging bag 1 is suctioned by a vacuum suction pad provided in the collecting arm 101. Next, the collecting arm 101 moves in the radial direction of the rotary table 71 so that the rectangular-bottomed packaging bag 1 in a folded state is moved to the reception rotary table 102. Next, the vacuum suction pad is detached. Accordingly, the rectangular-bottomed packaging bag 1 is moved from the rotary table 71 to the reception rotary table 102. Accordingly, manufacturing of the rectangular-bottomed packaging bag 1 is completed. The rectangular-bottomed packaging bag 1 delivered to the reception rotary table 102 is supplied to the filling device 53 for a later step. When delivery of the rectangular-bottomed packaging bag 1 in the station G is completed, the opening/closing plates 13 move to the station A again via the station H, and the steps described above are repeated.

### (Operations and effects)

Next, operations and effects of the method for manufacturing a rectangular-bottomed packaging bag, the device 52 for manufacturing a rectangular-bottomed packaging bag, the method for manufacturing a packaging body, and the device 50 for manufacturing a packaging body described above is described.

According to the method for manufacturing a rectangular-bottomed packaging bag of the present embodiment, the rectangular-bottomed packaging bag 1 is manufactured from the flat bag 9 through the unfolding step and the gusset forming step. In the unfolding step, the flat bag 9 is unfolded from the inside of the bag so that the opening cross-sectional shape of the flat bag 9 can become a rectangular shape and the flat bag 9 can be held from the inside of the bag. Thus, in the gusset forming step after the unfolding step, the side gussets 35 and the bottom gusset 21 can be formed while the flat bag 9 is held. In addition, since opening work and holding work of the flat bag 9 can be performed in the same step, productivity can be improved.

Therefore, it is possible to provide a method for manufacturing a rectangular-bottomed packaging bag, in which a method for holding the flat bag 9 performed when the rectangular-bottomed packaging bag 1 including gussets on three sides is manufactured from the flat bag 9 having the bottom gusset 21 can be made clear and productivity is improved.

It is preferable that the unfolding step include the plate inserting step and the plate separating step. In the plate inserting step, the pair of opening/closing plates 13 are inserted into the flat bag 9, and in the plate separating step, the pair of opening/closing plates 13 are separated from each other in the thickness direction of the flat bag 9. In this manner, the flat bag 9 can be opened, and the flat bag 9 can be held by the opening/closing plates 13 from the inside of the bag in an open state by separating the pair of opening/closing plates 13 from each other. In the gusset forming step, the side gussets 35 and the bottom gusset 21 are formed by thrusting the folding plate between the pair of opening/closing plates 13 in a state in which the flat bag 9 is held. Thus, gussets on three sides protruding to the inside of the bag can be formed by a simple method.

It is preferable that the method for manufacturing a rectangular-bottomed packaging bag include the pillar-joining-portion forming step of forming the pillar joining portions 31. Since the pillar joining portions 31 function as pillar structures supporting the rectangular-bottomed packaging bag 1, compared to when the rectangular-bottomed packaging bag 1 is formed without the pillar joining portions 31, the self-standing properties of the rectangular-bottomed packaging bag 1 can be improved. In addition, the pillar joining portions 31 can be easily formed by joining the circumferential edge portions of the side gussets 35. Thus, the pillar joining portions 31 can be formed while high productivity is maintained without making the manufacturing step complicated.

It is preferable that the method for manufacturing a rectangular-bottomed packaging bag include the flat bag manufacturing step. In the flat bag manufacturing step, the flat bag 9 can be easily manufactured by folding the rolled film 16 a plurality of times. In the flat bag manufacturing step, the side joining portions 33, the bottom joining portions 22, and the inclined joining portions 34 are formed. Since the inclined joining portions 34 are formed in the flat bag 9, when the flat bag 9 is unfolded in the unfolding step, positioning of the corner portions and four sides of the rectangular-bottomed packaging bag 1 can be easily performed by having the inclined joining portions 34 as references. Thus, the manufacturing properties of the rectangular-bottomed packaging bag 1 can be improved. In addition, the shape of the bottom 2 of the rectangular-bottomed packaging bag 1 can become a rectangular shape as designed by performing positioning of the corner portions of the rectangular-bottomed packaging bag 1. Thus, generation of distortion or creases of the bottom 2 can be curbed, and the rectangular-bottomed packaging bag 1 in which the self-standing properties and the quality of appearance are improved can be manufactured.

In the method for manufacturing a rectangular-bottomed packaging bag, it is preferable that the rectangular-bottomed packaging bag manufacturing step be consecutively performed after the flat bag manufacturing step. In this case, labor of carrying the flat bag 9 and a time loss can be reduced. Accordingly, production efficiency of the method for manufacturing a rectangular-bottomed packaging bag in its entirety in which the flat bag manufacturing step and the rectangular-bottomed packaging bag manufacturing step are combined can be improved. In addition, for example, after the flat bag manufacturing step ends, there is no need to separately provide a space or the like for storing the formed flat bag 9. Thus, the device for manufacturing the rectangular-bottomed packaging bag 1 can be miniaturized, and space-saving can be achieved.

According to the device 52 for manufacturing a rectangular-bottomed packaging bag of the present embodiment, the device 52 for manufacturing a rectangular-bottomed packaging bag includes the pair of opening/closing plates 13 which can be freely opened and closed, the side portion folding plates 11, and the bottom portion folding plate 12. By opening and closing the pair of opening/closing plates 13, the flat bag 9 can be opened and held in a state in which a cross section thereof has a rectangular shape. Thus, the unfolding step can be performed with a simple constitution of performing an opening/closing operation of the pair of opening/closing plates 13. The side portion folding plates 11 enter a space between the opening/closing plates 13 so that the side gussets 35 protruding toward the inside of the bag are formed. The bottom portion folding plate 12 enters a space between the opening/closing plates 13 so that the bottom gusset 21 protruding toward the inside of the bag is formed. Thus, the gusset forming step can be performed with a simple constitution using the side portion folding plates 11 and the bottom portion folding plate 12.

Therefore, it is possible to provide the device 52 for manufacturing a rectangular-bottomed packaging bag, in which a method for holding the flat bag 9 performed when the rectangular-bottomed packaging bag 1 including gussets on three sides is manufactured from the flat bag 9 including the bottom gusset 21 is made clear and productivity is improved.

According to the method for manufacturing a packaging body of the present embodiment, the filling step is consecutively performed after the rectangular-bottomed packaging bag 1 is manufactured by the method for manufacturing a rectangular-bottomed packaging bag (rectangular-bottomed packaging bag manufacturing step). Accordingly, compared to when the rectangular-bottomed packaging bag manufacturing step and the filling step are different steps which are not consecutively performed, labor of carrying the rectangular-bottomed packaging bag 1 and a time loss can be reduced. Particularly, when the packaging body 10 in which the rectangular-bottomed packaging bag 1 is filled with the content C1 is shipped, the packaging body 10 can be in a state of being able to be shipped with a minimal space without separately setting a space or the like for storage, by performing the rectangular-bottomed packaging bag manufacturing step and the filling step in a series of flow. Thus, it is possible to shorten the time taken from manufacturing of the rectangular-bottomed packaging bag 1 to manufacturing of the packaging body 10 which can be shipped, and it is possible to reduce a space necessary for manufacturing. Therefore, it is possible to provide a method for manufacturing a packaging body, in which the method for holding the flat bag 9 performed when the rectangular-bottomed packaging bag 1 including gussets on three sides is manufactured from the flat bag 9 including the bottom gusset 21 is made clear and productivity is improved.

According to the device 50 for manufacturing a packaging body of the present embodiment, since the filling device 53 for filling the rectangular-bottomed packaging bag 1 with the content C1 is provided, manufacturing of the rectangular-bottomed packaging bag 1 and filling with the content C1 can be completed through a series of lines. Thus, a manufacturing device in its entirety in which a device for manufacturing the rectangular-bottomed packaging bag 1 and the filling device 53 are combined can be miniaturized. In addition, compared to cases such as when the rectangular-bottomed packaging bag 1 is temporarily stored after the rectangular-bottomed packaging bag 1 is manufactured, and when a device for manufacturing the rectangular-bottomed packaging bag 1 and the filling device 53 are installed in different places or the like, the time and labor required for manufacturing and filling can be reduced. Accordingly, efficiency in the device 50 for manufacturing a packaging body can be improved.

Therefore, it is possible to provide the device 50 for manufacturing a packaging body, in which the method for holding the flat bag 9 performed when the rectangular-bottomed packaging bag 1 including gussets on three sides is manufactured from the flat bag 9 including the bottom gusset 21 is made clear and productivity is improved.

### (First modified example)

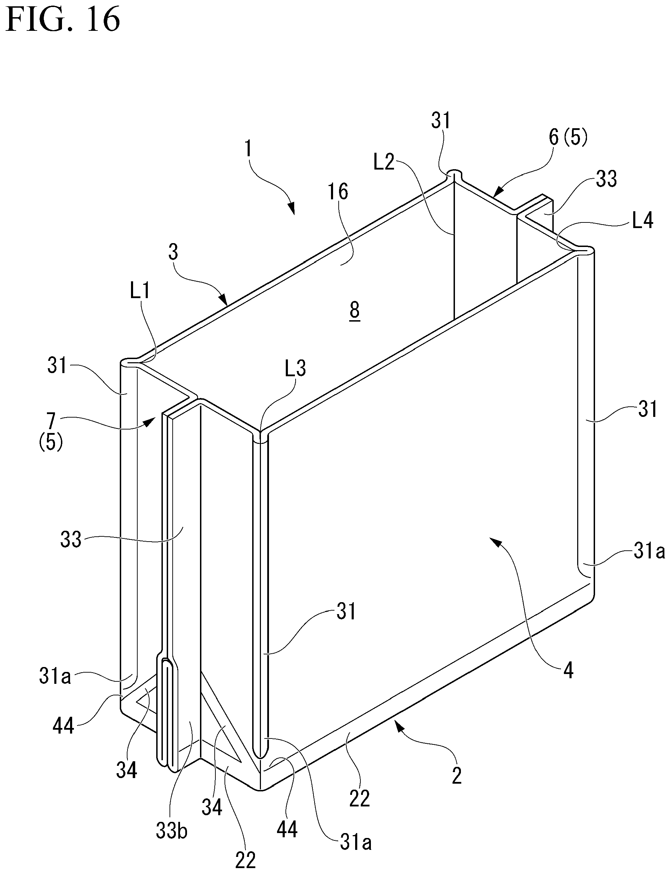

Next, a first modified example according to the present invention is described. Fig. 16 is a perspective view of an appearance of the rectangular-bottomed packaging bag 1 according to the first modified example. The first modified example differs from the first embodiment described above in that the lower end portions 31a of the pillar joining portions 31 are provided separately from the bottom joining portions 22.

As illustrated in Fig. 16, in the rectangular-bottomed packaging bag 1 of the first modified example, the lower end portions 31a of the pillar joining portions 31 are not connected to the bottom portion. In other words, in the pillar-joining-portion forming step of the first modified example, in the rectangular-bottomed packaging bag 1 in a state in which the front 3 and the rear 4 are brought into contact with each other (a closed state, refer to Fig. 9), portions of an edge portion in which the inner surfaces of the front 3 and the left side 7 face each other, that are not overlapping the bottom joining portions 22 are heated and pressurized. Accordingly, the pillar joining portions 31 are formed on the opening 8 side of the bottom joining portions 22 along each of the boundary lines L1, L2, L3, and L4.

According to the first modified example, compared to the first embodiment in which the pillar joining portions 31 and the bottom joining portions 22 are formed to be connected to each other, generation of creases or distortion on the bottom 2 in the corner portions in which the bottom joining portions 22 and the pillar joining portions 31 overlap each other can be curbed. Thus, the quality of appearance and the self-standing properties of the rectangular-bottomed packaging bag 1 can be improved. In addition, , there is no need to join the bottom joining portions 22 in the corner portions overlapping the pillar joining portions 31 in the bottom joining portions 22. For this reason, labor of separately applying a heat sealant or the like to the corner portions of the bottom joining portions 22 and joining the outer surfaces of parts of the film 16 to each other can be reduced, and the manufacturing method can be simplified.

In addition, the pillar joining portions 31 may not be provided in the upper end portion of the rectangular-bottomed packaging bag 1 where the opening 8 is positioned. The opening 8 is a portion to be closed after the rectangular-bottomed packaging bag 1 is filled with the content C1, and even if the pillar joining portions 31 are provided in the upper end portion of the rectangular-bottomed packaging bag 1, the pillar joining portions 31 in the portion of the upper end portion do not contribute to improvement of the self-standing properties of the rectangular-bottomed packaging bag 1. For this reason, even in a case of adopting a constitution in which the pillar joining portions 31 are not provided in the upper end portion of the rectangular-bottomed packaging bag 1, the self-standing properties of the rectangular-bottomed packaging bag 1 are improved.

### (Second modified example)

Next, a second modified example according to the present invention is described. Fig. 17 is a perspective view of an appearance of the rectangular-bottomed packaging bag 1 according to the second modified example. The second modified example differs from the first embodiment described above in that the rectangular-bottomed packaging bag 1 is formed without including the pillar joining portions 31 and the side joining portions 33 include fixing seal portions 40.

As illustrated in Fig. 17, the rectangular-bottomed packaging bag 1 of the second modified example is formed without including the pillar joining portions 31 at positions corresponding to the respective boundary lines L1, L2, L3, and L4. Specifically, the end portion positioned on the front 3 side of the left side 7 of the rectangular-bottomed packaging bag 1 is connected to the left side of the front 3. That is, the film 16 is bent by approximately 90 degrees at the first boundary line L1 in the upright direction along the left side of the front 3 so that the front 3 and the left side 7 are continuously formed. Similarly, the film 16 is bent by approximately 90 degrees at the second boundary line L2 along the right side of the front 3 so that the front 3 and the right side 6 are continuously formed. The film 16 is bent by approximately 90 degrees at the third boundary line L3 along the left side of the rear 4 so that the rear 4 and the left side 7 are continuously formed. The film 16 is bent by approximately 90 degrees at the fourth boundary line L4 along the right side of the rear 4 so that the rear 4 and the right side 6 are continuously formed.

Moreover, the rectangular-bottomed packaging bag 1 of the second modified example includes the fixing seal portions 40. The fixing seal portions 40 are provided in the lower end portions 33b of the side joining portions 33. The fixing seal portions 40 join side joining portions and the sides 5. The fixing seal portions 40 fix the side joining portions 33 along the sides 5. For example, such fixing seal portions 40 are formed in a fixing-seal-portion forming step performed after the gusset forming step in the method for manufacturing a rectangular-bottomed packaging bag.

A side joining portion folding step may be provided before the fixing-seal-portion forming step. In the side joining portion folding step, in order to join the side joining portions 33 and the sides 5, the side joining portions 33 are folded back to the sides 5 side such that they are brought into contact with the sides 5 throughout the overall length thereof from the lower end portions 33b to the upper end portions.

In addition, the rectangular-bottomed packaging bag manufacturing device 52 includes a fixing seal portion forming device (not illustrated) for forming the fixing seal portions 40. In addition, it may include a side joining portion folding device (not illustrated) for folding the side joining portions 33.

According to the second modified example, since there is no need to provide the pillar-joining-portion forming step, the number of steps in the method for manufacturing a rectangular-bottomed packaging bag can be reduced. Thus, the method for manufacturing a rectangular-bottomed packaging bag and the device 52 for manufacturing a rectangular-bottomed packaging bag can be simplified. In addition, since the side joining portions 33 include the fixing seal portions 40, a situation in which the side joining portions 33 protrude toward the outside of the bag with respect to the sides 5 is curbed. Thus, compared to when the side joining portions 33 protrude with respect to the sides 5, the appearance of the rectangular-bottomed packaging bag 1 can be made favorable. In the second modified example, the pillar joining portions 31 may be provided together with the fixing seal portions 40.

### (Third modified example)

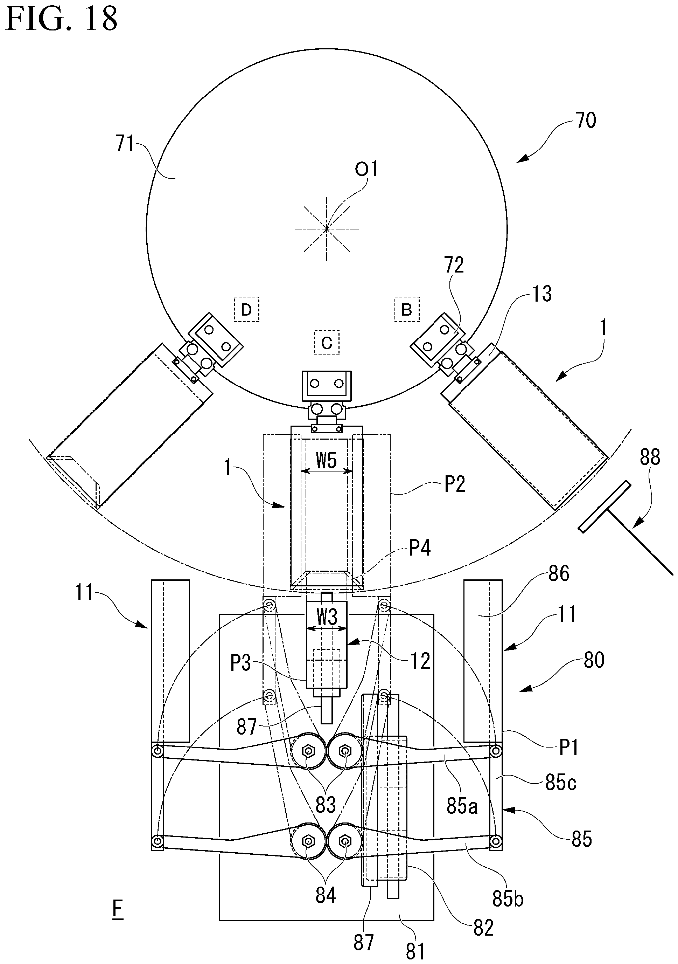

Next, a third modified example according to the present invention is described. Fig. 18 is a plan view of a folding device 80A according to the third modified example. In the third modified example, as illustrated in Fig. 18, a bottom push-opening device 88 is provided at a position on the outward side in the radial direction of the station B in the rotary table 71. The bottom push-opening device 88 includes a thrust portion having a rectangular thrust surface having a slightly smaller size than the bottom 2 of the flat bag 9 at a position facing the bottom 2 of the opened flat bag 9. In the bottom push-opening device 88, the thrust portion moves toward the center of the rotary table 71 in the radial direction, thereby having a function of thrusting the bottom 2 of the opened flat bag 9 held by the opening/closing plates 13 in the station B toward the center of the rotary table 71 in the radial direction.

When the rotary table 71 rotates and the opening/closing plates 13 move from the station A to the station B, the flat bag 9 supported by the pair of opening/closing plates 13 in a close state from the inside of the bag may move toward the outward side in the radial direction due to a centrifugal force. In addition, in the unfolding step in the station B, even when the pair of opening/closing plates 13 are separated from each other, the flat bag 9 may move to the outward side in the radial direction. In the present third modified example, the thrust portion of the bottom push-opening device 88 thrusts the bottom 2 of the flat bag 9 in a direction toward the center of the rotary table 71, and the bottom 2 of the flat bag 9 is held by the pair of opening/closing plates 13 in a separated state and the rectangular thrust portion. Accordingly, the movement of the flat bag 9 toward the outward side in the radial direction can be prevented. In addition, the shape of the bottom 2 can be adjusted so that it can be reliably formed as a rectangular flat surface. Accordingly, a gusset can be more reliably formed in the following gusset forming step in the station C.

Hereinabove, the present embodiments of the present invention are described. However, the technical scope of the present invention is not limited to the above described embodiments, and various changes can be added to or deleted from each of the constituent elements within a range not departing from the scope of the present invention, or combination of the constituent elements can be changed beyond the present embodiments.

For example, in the present embodiment of the flat bag manufacturing step described above, a laminate film including a heat fusion layer on one surface on which a plurality of films is laminated together may include a paper material, or it may be a mono-material laminate formed of a single family material. In addition, a single-layer film may be adopted in place of a laminate film, and it may be a film having heat fusion layers on both surfaces. In addition, in the flat bag manufacturing step described above, since the flat bag 9 including the bottom gusset 21 is manufactured by folding the film 16 fed from one raw material roll 54 into a W-shape, it is preferable that a single raw material roll be prepared, but the flat bag 9 may be manufactured from a plurality of raw material rolls such that a film for forming the flat portions 15 and a film for forming the bottom gusset 21 are fed from different raw material rolls.

In addition, for example, in the device 52 for manufacturing a rectangular-bottomed packaging bag, the pillar joining portions 31 are formed using the pressing device 90 provided at a position corresponding to the station E in the rotary table 71, but a pressing device may be provided in a position corresponding to a different station in the rotary table 71. Moreover, it may be performed at other places instead of a station in the rotary table 71. Specifically, for example, in the station D and the station E, heating and pressurizing may be performed by setting the temperatures of the pair of temperature plates 92 to the same or different temperatures. Thereafter, they may be cooled in the station F, and a folded property may be applied to the gussets 21 and 35, the folding portions 42, and the like of the rectangular-bottomed packaging bag 1. Thereafter, heating and cooling may be performed by providing a pressing device in the station of the reception rotary table 102 in Fig. 10, and the pillar joining portions 31 may be formed. In the station of the rotary table 102, since the opening/closing plates 13 are not present inside the rectangular-bottomed packaging bag 1, it is possible to form the pillar joining portions 31 in which the bag inner surfaces are more reliably joined to each other, which is preferable.

In addition, the folding device 80 in the device 52 for manufacturing a rectangular-bottomed packaging bag can be opened and closed by fixing two side portion folding plates with one support shaft in place of a link mechanism, similar to scissors.

In addition, the device 52 for manufacturing a rectangular-bottomed packaging bag may be provided with a discharge device in the station H for collecting a defective product when a defective product occurs, for example. In this case, a camera, other measurement devices, or the like for detecting a defective product may be separately provided in a predetermined station on the upstream side of the station H.

In addition, in the device 52 for manufacturing a rectangular-bottomed packaging bag, one pair of opening/closing plates 13 are provided in each of the stations in the rotary table 71, but a plurality of pairs of opening/closing plates 13 may be provided.

In addition, the device 52 for manufacturing a rectangular-bottomed packaging bag is a so-called rotary-type manufacturing device including the rotary table 71, but it may be a non-rotary-type device in which a rotary table is not used and the pair of opening/closing plates 13 which receive the flat bag 9 moves in a linear or curved manner along a rail or the like. In this device, circulation of the plates may be performed as follows after various steps are completed, and the flat bag 9 may be received again after delivery of the rectangular-bottomed packaging bag is completed.

Furthermore, the constituent elements in the present embodiments described above can be suitably replaced with known constituent elements within a range not departing from the scope of the present invention. In addition, the present embodiments described above may be suitably combined.

### INDUSTRIAL APPLICABILITY

The present invention can be utilized for a method for manufacturing a rectangular-bottomed packaging bag in which a rectangular-bottomed packaging bag including gussets on three sides is manufactured from a flat bag including a bottom gusset, a device for manufacturing a rectangular-bottomed packaging bag, a method for manufacturing a packaging body, and a device for manufacturing a packaging body.

### Reference Symbols

1 Rectangular-bottomed packaging bag
8 Opening
9 Flat bag
10 Packaging body
11 Side portion folding plate (folding plate)
12 Bottom portion folding plate (folding plate)
13 Opening/closing plate
16 Film
21 Bottom gusset
22 Bottom joining portion
31 Pillar joining portion
33 Side joining portion
34 Inclined joining portion
35 Side gusset
50 Device for manufacturing packaging body
52 Rectangular-bottomed packaging bag manufacturing device (device for manufacturing rectangular-bottomed packaging bag)
53 Filling device
C1 Content

## Claims

1. A method for manufacturing a rectangular-bottomed packaging bag, in which a rectangular-bottomed packaging bag including gussets on three sides is manufactured from a flat bag, the method comprising:
an unfolding step of unfolding the flat bag from the inside of the bag such that an opening cross section of the flat bag has a rectangular shape; and
a gusset forming step, after the unfolding step, of forming a side gusset and forming a bottom gusset while the formed side gusset is held.

2. The method for manufacturing a rectangular-bottomed packaging bag according to Claim 1,
wherein the unfolding step includes
a plate inserting step of inserting a pair of opening/closing plates into the flat bag, and
a plate separating step of separating the pair of opening/closing plates inserted into the flat bag from each other in a thickness direction of the flat bag, and
wherein in the gusset forming step, the side gusset and the bottom gusset are formed by thrusting a folding plate between the pair of opening/closing plates from the outside of the bag toward the inside of the bag.

3. The method for manufacturing a rectangular-bottomed packaging bag according to Claim 1 or 2, the method further comprising:
a pillar-joining-portion forming step of forming pillar joining portions extending along four corners of the opening cross section by joining a circumferential edge portion of the side gusset after the gusset forming step.

4. The method for manufacturing a rectangular-bottomed packaging bag according to any one of Claims 1 to 3, the method further comprising:
a flat bag manufacturing step of manufacturing the flat bag before the unfolding step,
wherein in the flat bag manufacturing step, a side joining portion formed in a side portion of the flat bag, a bottom joining portion formed in a bottom portion of the flat bag, and an inclined joining portion formed in a corner portion where the side joining portion and the bottom joining portion intersect each other and connecting the side joining portion and the bottom joining portion to each other are formed.

5. The method for manufacturing a rectangular-bottomed packaging bag according to Claim 4,
wherein the unfolding step is consecutively performed after the flat bag manufacturing step.

6. A device for manufacturing a rectangular-bottomed packaging bag, in which the rectangular-bottomed packaging bag is manufactured by the method for manufacturing a rectangular-bottomed packaging bag according to any one of Claims 1 to 5, the device comprising:
a pair of opening/closing plates for opening and closing so as to open the flat bag from the inside of the bag such that a cross section of the flat bag has a rectangular shape;
a side portion folding plate which enters a space between the pair of opening/closing plates and forms the side gusset; and
a bottom portion folding plate which enters a space between the pair of opening/closing plates and forms the bottom gusset.

7. A method for manufacturing a packaging body, the method comprising:
a filling step of consecutively manufacturing a packaging body, after a step of performing the method for manufacturing a rectangular-bottomed packaging bag according to any one of Claims 1 to 5, by filling the manufactured rectangular-bottomed packaging bag with a content.

8. A device for manufacturing a packaging body, in which the packaging body is manufactured by the method for manufacturing a packaging body according to Claim 7, the device comprising:
a filling device which fills the rectangular-bottomed packaging bag with the content.
